(19)

Europäisches
Patentamt
European
Patent Office
Office européen
des brevets

(11) **EP 3 722 861 A1**

(12) **EUROPEAN PATENT APPLICATION**
published in accordance with Art. 153(4) EPC

(43) Date of publication:
**14.10.2020 Bulletin 2020/42**

(21) Application number: **18886557.0**

(22) Date of filing: **31.07.2018**

(51) Int Cl.:
**G02B 21/00** *(2006.01)*          **G02B 21/06** *(2006.01)*
**G02B 21/10** *(2006.01)*

(86) International application number:
**PCT/JP2018/028534**

(87) International publication number:
**WO 2019/111440 (13.06.2019 Gazette 2019/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.12.2017 JP 2017234714**

(71) Applicant: **Nagayama, Kuniaki**
**Tokyo 166-0001 (JP)**

(72) Inventor: **Nagayama, Kuniaki**
**Tokyo 166-0001 (JP)**

(74) Representative: **AWA Sweden AB**
**Junkersgatan 1**
**582 35 Linköping (SE)**

(54) **OBSERVATION METHOD USING MICROSCOPE AND TRANSMISSION-TYPE MICROSCOPIC DEVICE**

(57)     A microscopic observation method and a transmission microscopic apparatus that can solve the problems of the conventional methods using the convergent light, and easily acquire highly accurate and sensitive intensity images and differential phase images of an object to be observed are provided. The observation method comprises: a step of emitting parallel light from a light source onto an observation object using, for example, Koehler illumination with a minimized aperture diaphragm; a step of projecting the light passed through the observation object to form an image on a microlens array; a step of detecting the intensity distribution of a diffractive light field formed on a microphotodetector array; a step of creating four-dimensional data from a plurality of diffractive images on the microphotodetector array with microlens array coordinates as two-dimensional real space coordinates and each set of detected coordinates on the microphotodetector array as two-dimensional frequency space coordinates; and a step of integrating an area and/or the center of gravity in the two-dimensional frequency space coordinates to acquire the two-dimensional intensity image and/or the two-dimensional differential phase image of the observation object.

FIG. 4

**Description**

BACKGROUND

1. Technical Field

The present invention relates to a microscope observation method and a transmission microscopic apparatus for acquiring intensity images and differential phase images of an object to be observed by utilizing the deflection of light and electrons at a time when they pass through a material.

2. Description of Related Art

The acquisition of phase information with a microscope has been performed by typically using interference effects conventionally. For example, in the field of the optical microscope, the Schlieren method, the Zernike phase contrast microscopic method and the Nomarski differential interference microscopic method are known. In addition, in the field of the electron microscope, the defocus method using the focus displacement and the phase difference electron microscope using a phase plate are known.

In all of these methods, the phase difference between two waves with different phases is converted to intensity modulation caused by the wave interference to analogize the phase difference from the intensity image. In the methods, in addition to the signal waves, a wave to be referred to, i.e., a reference wave to give a phase reference needs to be prepared. The simplified method using a part of the signal waves as a reference wave limits the observable phase size to achieve the "weak-phase object approximation," and the holographic method, which can overcome this limitation, requires an independent reference wave, which is separate from the signal wave. Accordingly, the methods cannot avoid ingenuity and complexity of the device.

In addition, a method to obtain the differential phase of an object to be observed using the deflection of light caused by a material without using the interference effect has recently been proposed (see non-patent documents 1 to 8). In the methods described in non-patent documents 1 to 8, a convergent beam of light, electrons, or X-rays (hereinafter collectively referred to as a "convergent beam") is radiated onto an object to be observed with the object being scanned, and the light deflection caused by the refractive index change at the radiation position is detected to perform imaging.

Since the refractive index change corresponds to a phase change, i.e., the magnitude of the differential phase, in the techniques described in non-patent documents 1 to 8, a differential phase scanning image of an object to be observed is observed by quantitatively retrieving the degree of deflection of the convergent light.

[Prior Art Documents]

[Non-Patent Documents]

[Non-Patent Document 1] E. M. Waddell and J. N. Chapman, "Linear imaging of strong phase objects using asymmetrical detection in STEM," Optik, vol. 54, 1979, pages 83-96
[Non-Patent Document 2] G. R. Morrison and J. N. Chapman, "A comparison of three differential phase contrast systems suitable for use in STEM," Optik, vol. 64, 1983, pages 1-12
[Non-Patent Document 3] J. Palmer and G. Morrison, "Differential phase contrast imaging in the scanning transmission x-ray microscope, " Proc. Short-Wavelength Coherent Radiation, vol. 11, 1991, pages 141-145
[Non-Patent Document 4] A. Gianoncelli, G. R. Morrison, B. Kaulich, D. Bacescu and J.Kovac, "Scanning transmission x-ray microscopy with a configurable detector," Appl. Phys. Lett., vol. 89, 2006, pages 251117-1 to 3
[Non-Patent Document 5] B. Hornberger, M. Feser, C. Jacobsen, "Quantitative amplitude and phase contrast imaging in a scanning transmission X-ray microscope," Ultramicroscopy, 107, 2007, pages 644-655
[Non-Patent Document 6] P. Thibault, M. Dierolf, A. Menzel, O. Bunk, C. David, and F. Pfeiffer, "High-Resolution Scanning X-ray Diffraction Microscopy," Science, vol. 321, 2008, pages 379-382
[Non-Patent Document 7] A. Lubk and J. Zweck "Differential phase contrast: An integral perspective," Phys. Rev., vol. A91, 2015, pages 23805-1 to 6
[Non-Patent Document 8] I. Lazic, E. G. T. Bosch and S. Lazar, "Phase contrast STEM for thin samples: Integrated differential phase contrast," Ultramicroscopy, vol. 160, 2016, pages 265-280

SUMMARY

[Problem(s) to be Solved by the Invention]

However, the conventional scanning differential phase method using convergent light has the following problems. The first problem is that with the conventional method, the image observed on the detection plane is a diffracted image and the image of the object to be observed cannot be directly observed when it is observed. Accordingly, when various optical adjustments are required, the adjustments cannot be performed promptly.

The second problem is that the observational data becomes huge. The image acquired by the scanning differential phase method is described by a combination of two-dimensional scanning coordinates $r_s$ in the light source plane and two-dimensional observation coordinates $s_d$ in the detection plane, i.e., four-dimensional coordinates $(r_s, s_d)$, where r is the real space coordinate, s is the frequency space (wavenumber space) coordinate, the subscript s is the light source plane, and the subscript d is the detection plane. The accuracy of the two-dimensional scanning coordinates of the light source plane depends on the resolution of the image, and the accuracy of the two-dimensional observation coordinates of the detection plane depends on the observation accuracy of the differential phase. The increase of the accuracy of them needs to increase the resolution of each data resolution, i.e., the digital accuracy. For example, with a digital accuracy of 1 megabyte each, a huge storage amount of 4-dimensional data, one terabyte is needed.

The third problem is that the increase in observation time is necessitated by the huge storage amount. In the conventional scanning differential phase method, since a two-dimensional diffraction image is observed for one point $r_s$ of an image obtained by scanning, for example, the two-dimensional data need to be transferred for each point that constitutes the image to store four-dimensional data. Even if a high-speed computer is used to transfer one megabyte of two-dimensional diffraction images per image in one millisecond, for example, it takes 1000 seconds to observe one megabyte of image points.

Although the principle of technique for observing the differential phase image of an object to be observed by scanning and deflecting convergent light was proposed more than 40 years ago, it has not been widely used in general microscopy due to the problems described above, and thus has only been applied to X-ray diffraction method (see non-patent documents 3 to 6), which needs to rely on the diffraction method due to the difficulty in lens fabrication, and electron microscopy (see non-patent documents 2 and 8) where the scanning type is the standard method.

Accordingly, an object of the present invention is to provide a microscope observation method and a transmission microscopic apparatus that can solve the problems of the conventional methods using the convergent light described above, and easily acquire highly accurate and sensitive intensity images and differential phase images of an object to be observed.

[Means for Solving the Problems]

A microscope observation method according to the present invention includes the steps of: parallelly irradiating an object to be observed with light emitted from a light source according to Kohler illumination method with a minimum aperture diaphragm; focusing the light that has passed through the object to be observed and projecting it onto a microlens array disposed on an image plane to be imaged; detecting an intensity distribution of a diffracted light field formed on a microphotodetector array arranged on a backward detection plane of the microlens array; generating four-dimensional data from a plurality of diffraction images on the microphotodetector array, where coordinates of the microlens array are two-dimensional real space coordinates and each set of detection coordinates on the microphotodetector array is two-dimensional frequency space coordinates; and calculating area integral and/or center-of-gravity integral of the four-dimensional data in the two-dimensional frequency space coordinates to obtain a two-dimensional intensity image and/or two-dimensional differential phase image of the object to be observed.

Another microscope observation method according to the present invention includes the steps of: parallelly radiating light simultaneously emitted from each point light source configuring a surface light source onto an object to be observed according to a Kohler illumination method using the surface light source; focusing the light that has passed through the object to be observed to form a real image on a detection plane; acquiring a real image from an intensity distribution of a light field formed on the detection plane and capturing a plurality of real images that differ in focus from each other; creating three-dimensional data from the real images; and acquiring a two-dimensional intensity image and/or a two-dimensional differential phase image of the object to be observed by performing three-dimensional Fourier transform of the three-dimensional data, then using a projection-section theorem to generate four-dimensional data configured by two-dimensional light source plane coordinates and two-dimensional detection plane coordinates, and computing an area integral and/or center of gravity integral in the two-dimensional light source plane coordinates.

Another microscope observation method according to the present invention is directed to a dark field method that includes: an illumination step of parallelly radiating light emitted from a point light source onto an object to be observed in an oblique direction; an image forming step of focusing scattered light that has been deflected by the object to be observed and passed through a diaphragm arranged at a position conjugate with the point light source to form a real image on a detection plane; performing the illumination step and the image forming step while two-dimensionally scanning the point light source to generate four-dimensional data configured by two-dimensional light source plane coordinates and two-dimensional detection plane coordinates; and calculating center of gravity integral of the four-dimensional data in the two-dimensional light source plane coordinates to obtain a two-dimensional differential phase image of the object to be observed. A beam stopper is arranged at a conjugate point formed in the diaphragm to shield the non-scattered component.

Another microscope observation method according to the present invention is directed to a dark field method that includes: an illumination step of parallelly radiating light emitted from a point light source onto an object to be observed in an oblique direction; an image forming step of focusing scattered light that has been deflected by the object to be observed and passed through a diaphragm arranged at a position conjugate with the point light source to form a real image on a detection plane; performing the illumination step and the image forming step while two-dimensionally scanning the diaphragm to generate four-dimensional data configured by two-dimensional scanning coordinates and two-dimensional detection plane coordinates; and calculating a center of gravity integral of the four-dimensional data in two-dimensional light source plane coordinates that are point-symmetrical with the two-dimensional scanning coordinates to obtain a two-dimensional differential phase image of the object to be observed. A beam stopper is arranged at a conjugate point formed in the diaphragm to shield the non-scattered component.

Another microscope observation method according to the present invention is directed to a dark field method that includes: an illumination step of parallelly radiating light emitted from a point light source onto an object to be observed in an oblique direction; an image forming step of focusing scattered light that has been deflected by the object to be observed and passed through an H-shaped slit arranged at a position conjugate with the point light source to form a real image on a detection plane; adjusting a position of a light source image at a cross-linked portion of the H-shaped slit and scanning light from the point light source or the H-shaped slit in one dimension at the cross-linked portion to generate three-dimensional data; and calculating center of gravity integral of the one-dimensional data in each point of the two-dimensional detection plane coordinates for the three-dimensional data to obtain a two-dimensional differential phase image of the object to be observed. A beam stopper is arranged at a conjugate point formed in the H-shaped slit to shield the non-scattered component.

Another microscope observation method according to the present invention is a dark field method that includes: an illumination step of parallelly radiating light emitted from a point light source onto an object to be observed in an oblique direction; a step of focusing scattered light that has been deflected by the object to be observed and passed through a diaphragm arranged at a position conjugate with the point light source to project and form an image onto a microlens array arranged on an image plane; a step of detecting an intensity distribution of a diffracted light field formed on a microphotodetector array arranged on a backward detection plane of the microlens array; a step of generating four-dimensional data from a plurality of diffraction images on the microphotodetector array, where coordinates of the microlens array are two-dimensional real space coordinates and each set of detection coordinates on the microphotodetector array are two-dimensional frequency space coordinates; and a step of calculating center of gravity integral of the four-dimensional data in the two-dimensional frequency space coordinates to obtain a two-dimensional differential phase image of the object to be observed, where a beam stopper is arranged at an intersection of a diaphragm plane and an optical axis to shield non-scattered component.

A transmission microscopic apparatus according to the present invention includes: an illumination optical system for parallelly irradiating an object to be observed with light emitted from a light source according to Kohler illumination method with a minimum aperture diaphragm; an image forming optical system for focusing the light that has passed through the object to be observed and projecting it onto a microlens array disposed on an image plane to be imaged; an imaging portion for detecting an intensity distribution of a diffracted light field formed on a microphotodetector array arranged on a backward detection plane of the microlens array; a four-dimensional data generating portion for generating four-dimensional data from a plurality of diffraction images on the microphotodetector array, where coordinates of the microlens array are two-dimensional real space coordinates and each set of detection coordinates on the microphotodetector array are two-dimensional frequency space coordinates; and a data processor for calculating an area integral and/or center of gravity integral of the four-dimensional data in the two-dimensional frequency space coordinates to obtain a two-dimensional intensity image and/or a two-dimensional differential phase image of the object to be observed.

Another transmission microscopic apparatus according to the present invention includes: an illumination optical system for parallelly radiating light simultaneously emitted from each point light source configuring a surface light source onto an object to be observed according to Kohler illumination method using the surface light source; an image forming optical system for focusing the light that has passed through the object to be observed to form a real image on a detection plane; an imaging portion for acquiring a real image from an intensity distribution of a light field formed on the detection plane and capturing a plurality of real images that differ in focus from each other; a three-dimensional data generating portion for generating three-dimensional data from the real images; and a data processor for generating a two-dimensional intensity image and/or a two-dimensional differential phase image of the object to be observed from the three-dimensional data, where the data processor acquires the two-dimensional intensity image and/or the two-dimensional differential phase image of the object to be observed by performing three-dimensional Fourier transform of the three-dimensional data, then using a projection-section theorem to generate four-dimensional data configured by two-dimensional light source plane coordinates and two-dimensional detection plane coordinates, and computing an area integral and/or center of gravity integral in the two-dimensional light source plane coordinates.

In the transmission microscopic apparatus according to the present invention, the illumination optical system may be configured by one or more lenses and one or more diaphragms.

Also, in the transmission microscopic apparatus according to the present invention, the image forming optical system may be configured by a diaphragm plane arranged between at least two lenses.

[Advantage of the Invention]

According to the present invention, a parallel light is radiated in place of a convergent light and a real image is formed at any position, for example, at the detection plane or a position in front of the detection plane, achieving a reduction of high dimensionality as high as four dimensions, and easily acquiring a highly accurate and sensitive intensity image and a differential phase image of an object to be observed through the observation of the real image.

BRIEF DESCRIPTION OF THE DRAWINGS

Features, advantages, and technical and industrial significance of exemplary embodiments of the disclosure will be described below with reference to the accompanying drawings, in which like numerals denote like elements, and wherein:

FIG. 1 is a diagram schematically illustrating conventional imaging process of a four-dimensional microscope for observing diffraction images scanned by convergent light under critical illumination,

FIG. 2 is a diagram schematically illustrating an example of a configuration of an optical system with three lenses and four optical planes,

FIG. 3A is an imaging diagram of a conventional scanning four-dimensional method in which a converging illumination light is applied to the optical system illustrated in FIG. 2,

FIG. 3B is an imaging diagram of the parallel light-illuminated four-dimensional method of the present invention in which a parallel illumination light is applied,

FIG. 4 is a ray diagram of the imaging process in the four-dimensional microscope observation method of the first embodiment of the present invention,

FIG. 5 is a block diagram illustrating an example of a configuration of a transmission microscopic apparatus according to the first embodiment of the present invention,

FIGS. 6A to 6C are diagrams illustrating an imaging process in a four-dimensional microscope observation method according to a second embodiment of the present invention using a light field camera,

FIGS. 7A to 7D are schematic diagrams illustrating examples of methods for achieving multi-focusing in the real-image four-dimensional microscope observation method according to a third embodiment of the present invention, where FIG. 7A illustrates a focus-shifting method for displacing the focus of an objective lens, FIG. 7B shows a detecting plane shifting method, and FIGS. 7C and 7D show an object-plane shifting method,

FIGS. 8A and 8B are diagrams each illustrating an imaging process according to a fourth embodiment of the present invention in a four-dimensional microscope observation method where FIG. 8A shows an example of a configuration applied to an optical microscope and FIG. 8B shows an example of a configuration applied to an electron microscope,

FIG. 9 illustrates an H-shaped slit used in a four-dimensional microscope observation method of a first variant of the fourth embodiment of the present invention,

FIG. 10 is a diagram illustrating the imaging process in the four-dimensional microscope observation method according to a fifth embodiment of the present invention,

FIG. 11 is a contour line plot of a diffraction image of a renal tissue section on a microdetector taken under a point light source Kohler illumination on an optical axis using a light field microscope equipped with a microlens array,

FIG. 12 is a diagram illustrating an imaging process in a four-dimensional microscope observation method according to a sixth embodiment of the present invention,

FIG. 13 is a diagram illustrating an H-shaped slit used in the four-dimensional microscope observation method of a first variant of the sixth embodiment of the present invention,

FIG. 14 is a flowchart illustrating a data processing method used in an example of the present invention,

FIGS. 15A to 15D are microscopic images of a kidney tissue section of a mouse where FIG. 15A shows a differential phase light field microscopy image under a point light source, FIG. 15B shows a differential phase light field microscopy image under a surface light source, FIG. 15C shows a coarse-grained image of a normal differential interference microscope, and FIG. 15D shows an original image of a normal differential interference microscope with a large number of pixels,

FIGS. 16A and 16B each are a microscopic image of a kidney tissue section of a mouse where FIG. 16A shows a bright field light field microscopy image under a point light source, and FIG. 16B shows a coarse-grained image of normal bright field method, and

FIGS. 17A and 17B each are a microscopic image of a kidney tissue section of a mouse where FIG. 17A shows a bright field light field microscopy image under a surface light source, and FIG. 17B shows a coarse-grained image of normal bright field method.

## DETAILED DESCRIPTION OF EMBODIMENTS

[Embodiments]

The embodiments for implementing the present invention will be described in detail with reference to the accompanying drawings. The present invention is not limited to the embodiments described below. The description will be given in the following order.

1. Principle of observation of differential phase quantities in the conventional method

2. First Embodiment:

Differential phase image observation method using parallel light radiation in place of convergent light radiation, and two-dimensional scanning under a point light source

3. Second Embodiment

Scanning-free differential phase image observation method using a combination of parallel light radiation from a point light source and a microlens

4. Third Embodiment

Differential phase image observation method with reduced scanning dimension by a combination of parallel light radiation from a plane light source and multi-focus operation that captures multiple images with different focuses by changing focus position

5. Fourth Embodiment

Differential phase image observation method for observing a dark field image by arranging a beam stopper at a focal point of a back focal plane of an objective lens for parallel light emitted from a point light source

6. First Variant of the Fourth Embodiment

Differential phase image observation method for observing a dark field image by limiting the scanning dimension to one-dimensional direction by using an H-shaped slit for light source scanning or oblique light scanning

7. Fifth Embodiment

Differential phase image observation method for observing a dark field image by arranging a point light source in the second embodiment on the optical axis and arranging a stopper on the optical axis of the back focal plane of the objective lens 8. Sixth Embodiment

Differential phase image observation method for observing a dark field image using a fixed stopper in place of the light source-stopper conjugate scanning or the oblique light-stopper conjugate scanning in the fourth embodiment 9. First Variant of the Sixth Embodiment

Differential phase image observation method for observing a dark field image by limiting the scanning dimension to one-dimensional direction by using an H-shaped slit for diaphragm scanning

(Principle of observation of differential phase quantities in the conventional method)

[Convergent light deflection and differential phase]

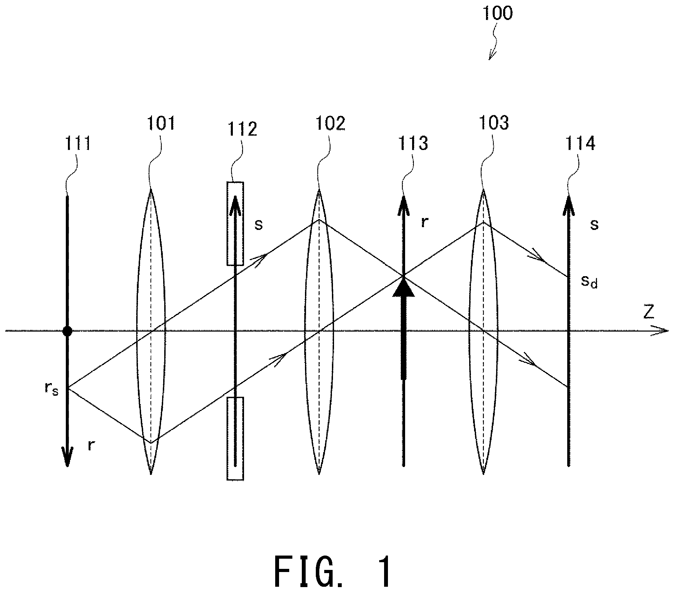

FIG. 1 is a diagram schematically illustrating the imaging process of a conventional convergent-beam scanning diffraction image observation four-dimensional microscope under the critical illumination using the convergent light deflection described above. The term "four dimensions" in a four-dimensional microscope is an expression of the basic principle of the present invention, which treats the two-dimensional coordinates of the light source plane and the two-dimensional coordinates of the detection plane independently, as described below. The imaging optical system illustrated in FIG. 1 has four optical planes: the first optical plane is a light source plane, the second optical plane is a diaphragm plane, the third optical plane is an object plane, and the fourth optical plane is a detection plane. In the optical system 100, light emitted from a point on the light source plane 111 in the pre-focus plane of the first lens 101 passes through the first lens 101, the diaphragm 112, and the second lens 102, and is radiated onto the object to be observed (the object plane 113) as convergent light.

The convergent light deflected by the object to be observed passes through the third lens 103 and forms a diffracted light circle, which is an image of the diaphragm on the detection plane 114 installed in the back focal plane. This movement of the diffracted light circle gives the differential phase, and the differential phase scanning image is obtained by scanning the light source position. The imaging process of an object by light is also directed to a Fourier transform process with three lenses 101 to 103 connecting the four optical planes, and this situation is expressed as a continuous Fourier transform (FT) or an inverse Fourier transform ($FT^{-1}$), as illustrated in the lower portion of FIG. 1.

Specifically, the light $5(r)$ emitted from one point $r_s$ on the light source plane 111 in the front focal plane of the first lens 101 experiences an effect represented by an inverse Fourier transform FT-1 when passing through the first lens 101, experiences an effect represented by a diaphragm function $P(s)$ at the diaphragm, experiences an effect represented by a Fourier transform FT when passing through the second lens 102, and is radiated onto the object plane 113 represented by $t(r)$ as a convergent light represented by a probe function $p(r_s-r)$. When the convergent light deflected by the object passes through the third lens 103, it experiences the effect expressed by the Fourier transform FT to form a diffracted light circle expressed by the following equation 1 on the detection plane 114 placed on the back focal plane.

[Equation 1]

$$\overline{p(\boldsymbol{r}_s - \boldsymbol{r})\,t(\boldsymbol{r})}^{\boldsymbol{r}}$$

This movement of the diffracted light circle gives a differential phase, and if the light source position is scanned, the light converging under the critical illumination scans the object to be observed, acquiring a differential scanning image. As described above, the imaging process of the object by light is also directed to a Fourier transform process with three lenses connecting the four optical planes. The diaphragm function $P(s)$ and the probe function $p(r)$ are connected by the Fourier transform.

As for the size of the diffracted light circle required for the detector to quantify the circular movement of the diffracted light circle, the lower limit thereof is directed to the size of the diameter of the diffracted light circle to which the maximum width of movement of the diffracted light circle is added in consideration of the width of the movement. The diffracted light circle itself is an image of the diaphragm arranged on the diaphragm plane 112, and thus the size thereof is proportional to the size of the diaphragm. The smaller the convergent light is to improve spatial resolution, the larger the diaphragm of which size is in inverse proportion to that of the convergent light is, and thus the larger the corresponding detector is. In contrast, the observation accuracy of the differential phase is proportional to the spatial resolution of the detector. The required specification of the detector thus depends on both the image spatial resolution and the differential phase observation accuracy to be obtained.

In general, light waves and electron waves (carrier waves) that pass through the object to be observed experience a phase change dependent on the refractive index. Since the refractive index is spatially distributed, the corresponding phase is spatially distributed as well. In this case, the relationship between the phase and refractive index is expressed by the following equation 2

[Equation 2]

$$\theta(\boldsymbol{r}) = \frac{2\pi}{\lambda}\left(n\left(\boldsymbol{r}\right) - 1\right)\ell(\boldsymbol{r})$$

In the equation 2 above, θ(r) is the phase distribution, n(r) is the refractive index distribution, l(r) is the thickness distribution, r is the two-dimensional spatial coordinate, and λ is the wavelength of the carrier wave. The "1" in (n(r)-1) is the refractive index of air (or, more precisely, vacuum), and the change in the refractive index between at a location when the object is present and a location when the object is not present, corresponds to the phase change. In addition, (n(r)-1)l(r) corresponds to the optical distance.

The distribution of the refractive index can be approximated to that of a small prism if viewed over a small range. A microprism is a spatial change in the refractive index of a small portion, corresponds to a spatial change in phase based on the relationship in the equation 1 above, and thus is eventually proportional to the gradient of the phase spatial distribution (two-dimensional first derivative = dθ(r)/dr). In contrast, in the case where the object to be observed is considered as a collection of microprisms, when a narrow area is illuminated with convergent light, the light is bent in a direction different from the direction of incidence by the microprisms. This is the physical process of the light beam deflection that occurs when the convergent light is radiated onto the object to be observed.

Accordingly, if the deflection of the convergent light can be quantified, the differential phase amount can be observed. The simplest way to determine the amount of deflection is to quantify the spatial movement of the diffracted image (diffracted light circle) caused by the deflection of the diffracted image produced on the detection plane by the convergent light radiated onto the object to be observed.

[Conventional Differential Phase Image Observation Method Using Convergent Light (Beam) Radiation and Scanning]

The most simplified microscope optical system is a two-lens system configured by an objective lens and an eyepiece lens. In the microscope observation method according to the present embodiment, the light source plane needs to be explicitly defined since the four-dimensional observation is performed based on the four-dimensional coordinates represented by the two-dimensional coordinates of the light source plane and the two-dimensional coordinates of the detection plane, which are defined independently for the light source plane and the detection plane, respectively. Accordingly, in the microscope observation method according to the present embodiment, a three-lens system including a light source plane and a focusing lens (collector lens) is employed.

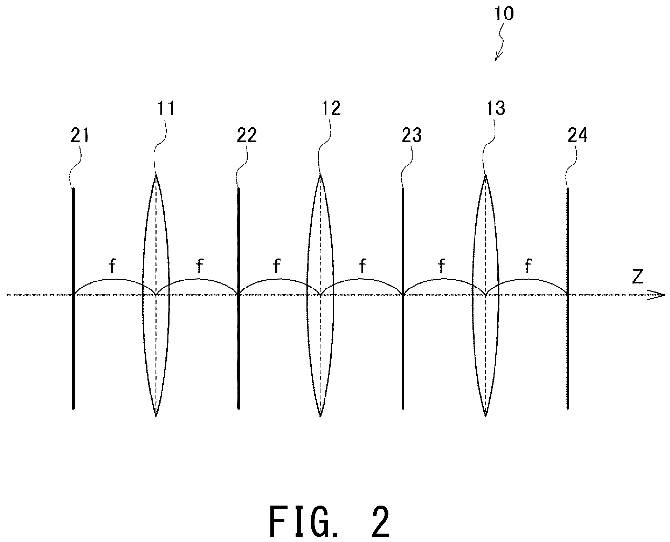

FIG. 2 is a diagram schematically illustrating an example of a configuration of an optical system with three lenses and four optical planes. In the optical system 10 illustrated in FIG. 2, three lenses 11 to 13 are arranged in four optical surfaces 21 to 24, specifically the lens 11 is arranged between the light source plane 21 and the object plane 22, the lens 12 is arranged between the object plane 22 and the diaphragm plane 23, and the lens 13 is arranged between the diaphragm plane 23 and the detection plane 24, respectively. FIG. 2 is the most simplified minimum model of a microscope optical system that focuses light from the light source plane 21 onto the detection plane 24, and in the actual microscope, a more complex configuration including other optical components such as a diaphragm is employed in all of the first lens 11, the second lens 12, and the third lens 13. However, from a mathematical point of view, its function can be represented by the minimal model illustrated in FIG. 2.

To further simplify the treatment of the three-lens, four-optical-plane system illustrated in FIG. 2, in the microscope observation method according to the present embodiment, the three lenses 11 to 13 have the same focal length f, and the three lenses, four-optical-plane, and six-focal-point system in which these seven components are combined at the same focal length interval. Since the magnification function of the microscope is not considered here, the magnification of the image is treated as 1x. In the present embodiment, the lens effect is treated as a convergent effect of light when treated physically and as a Fourier transform effect when treated mathematically.

FIG. 1 illustrates a conventional differential phase image observation method in which a convergent light is scanned and radiated by the optical system of three lenses and four optical planes illustrated in FIG. 2. The light field of the detection plane is referred to as Uc $(r_s, s_d)$ using the real space coordinates $r_s$ of the light source plane and the frequency space coordinates $s_d$ of the detection plane. In the order of the two two-dimensional coordinates, which are variables of the four-dimensional function, the coordinates of the light source plane are placed first and the coordinates of the detection plane are placed second. Since the differential phase is represented by the movement of the diffracted light circle caused by the deflection of the convergent light, the specific computation is performed by using the center of gravity calculation at the detection plane of the intensity image formed by the light field (the squared detection image)$|Uc(r_s, s_d)|^2$. This is referred to as the $s_d$ center of gravity at the detection plane.

In general, two microscopic methods are known, i.e., a scanning method, in which a convergent light is radiated onto an object to be observed and then the convergent light is scanned in two dimensions to obtain a two-dimensional plane image, and a parallel light radiation method, in which a parallel light is radiated onto the object to be observed and a two-dimensional real image is obtained by a single radiation without scanning. As mentioned above, in the case of the convergent light radiation, the illumination light strikes a small area of the object to be observed, and thus the degree of deflection can be locally identified. In contrast, in the case of the parallel light radiation, it has been thought that the differential phase cannot be extracted in a location-dependent manner since the illumination light is radiated over a wide area of the object to be observed and is deflected in all four directions, and the degree of deflection is locally specified on the object.

(First Embodiment)

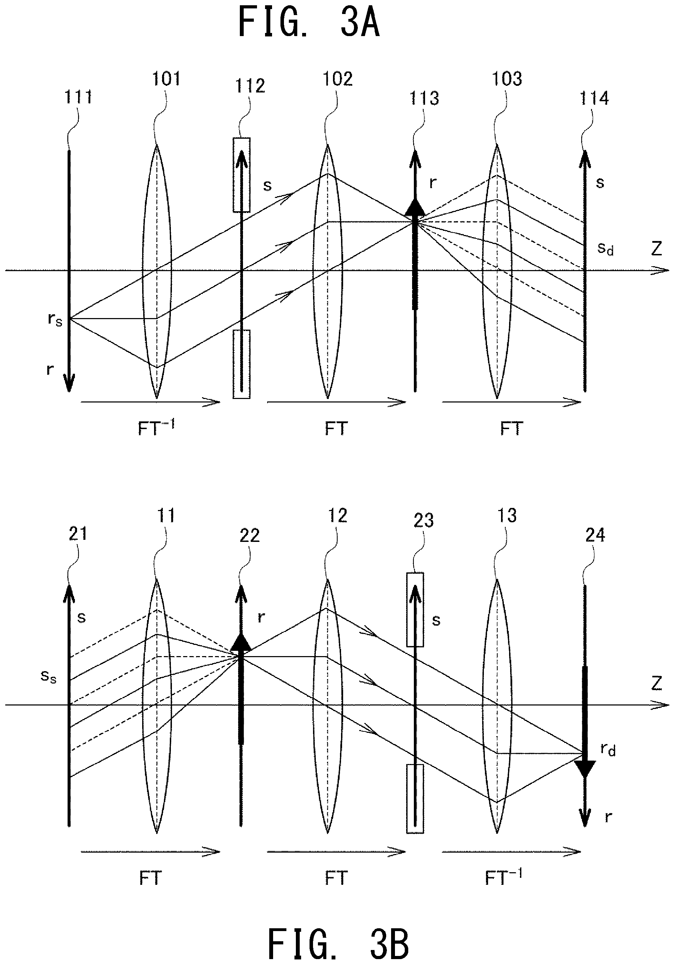

First, a four-dimensional microscope observation method according to a first embodiment of the present invention will be described. The inventor has found that the differential phase can be observed even by the parallel light radiation method if the nature of reverse movement of light is used and if a four-dimensional observation is performed in place of the usual two-dimensional observation, achieving the present invention. FIG. 3A is an imaging diagram of a conventional scanning four-dimensional method in which a converging illumination light is applied to the optical system 10 illustrated in FIG. 2, and FIG. 3B is an imaging diagram of the parallel light-illuminated four-dimensional method of the present invention in which a parallel illumination light is applied to the optical system 10. FIGS. 3A and 3B are mirrored objects, which are extensions of the TEM-STEM reciprocity theorem to the four-dimensional method established by a scanning transmission electron microscope (STEM) using convergent illumination light and a transmission electron microscope (TEM) using parallel illumination light, which have been already found in the field of the electron microscope.

As shown in FIG. 3A, in the scanning four-dimensional method in which convergent illumination light is applied, for example, three rays of light are emitted from one light source point rs on the light source plane 111. Each ray of light is focused at one point on the object plane 113 by the lenses 101 and 102, scattered by the object to be observed, and then diffracted by the lens 103 to be observed as diffracted light spreading on the two-dimensional coordinates of the detection plane 114. The solid line in FIG. 3A shows the ray of light is locally deflected by the object to be observed, and the wavy line shows that the light beam goes straight ahead when the object to be observed is not present. That is, FIG. 3A clearly shows the movement of the diffracted light pattern on the detection plane 114 in accordance with the deflection of the convergent light by the object to be observed. This amount of movement corresponds to the amount of the differential phase.

The ray diagram is established even if the imaging diagram shown in FIG. 3A is mirror-reversed by utilizing the reverse movement of light. FIG. 3B is an optical reverse movement ray diagram in FIG. 3A, in which parallel illumination light beams inclined to the optical axis are radiated from a number of points on the light source plane onto the object to be observed. FIG. 3B shows an image of the light source plane and the detection plane in FIG 3A replaced and then reversed right and left, illustrating light rays focused on one image point on the detection plane 24 are emitted from three different point light sources on the light source plane 21. The ray diagram in this case differs depending on the presence or absence of the object to be observed on the object plane 22, and is shown as solid and dashed lines in FIG. 3B, respectively. This corresponds to the movement of the diffracted light pattern on the detection plane 114 in the radiation of the convergent light, and shows the movement of the region of the light source plane configured by a number of point light sources converging on a single point on the detection plane 24 in the radiation of the parallel light (hereinafter referred to as light source circle). If the movement can be quantified, the differential phase amount can be determined at each point on the object to be observed.

In the reverse movement of light, it is important that all the optical planes are replaced, for example, the light source plane and detection plane are replaced. In this case, although the physical meaning of the optical plane changes, the mathematical properties of the coordinate system assigned to each optical plane, i.e., whether it is a real space coordinate system or a frequency space coordinate system are retained. This changes the frequency space coordinates $s_d$ of the detection plane to $s_s$, and the real space coordinates $r_s$ of the light source plane to $r_d$. According to the notation method $U_c$ $(r_s, s_d)$ of the light field of the detection plane of the convergent light radiation four-dimensional method described above, the light field of the detection plane of the parallel light radiation four-dimensional method using parallel light is denoted as $U_p$ $(s_s, r_d)$. Here, $r_s$ and $r_d$ represent the imaging coordinates, $s_d$ represents the ray direction of the diffracted light, and $s_s$ represents the ray direction of the source light.

In the case of the parallel light radiation four-dimensional method, in contrast to the convergent light radiation four-dimensional method, the differential phase amount is obtained by calculating the $s_s$ center of gravity on the light source plane with the square of the light field of the detection plane $|U_p (s_s, r_d)|^2$, since the deflection of the convergent light appears as the movement of the light source circle as described above.

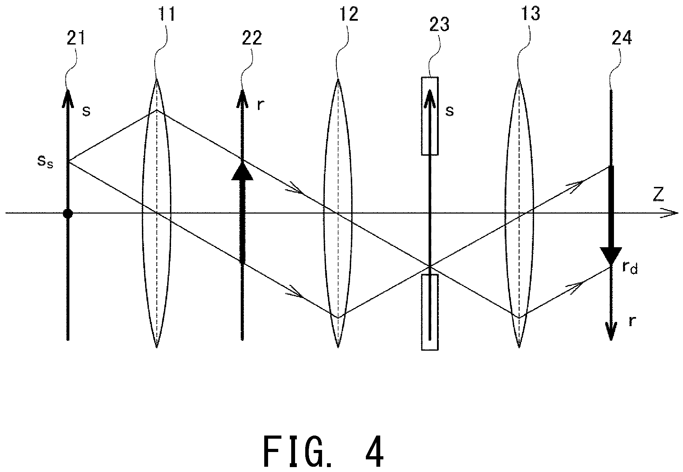

FIG. 4 is a ray diagram of the imaging process in the four-dimensional microscope observation method according to a first embodiment of the present invention, in which FIG. 3B is redrawn in accordance with the ray diagram method shown in FIG. 1. In the usual parallel light radiation method, a point light source is placed on the optical axis. In contrast, in the parallel light radiation four-dimensional method, light emitted from a point away from the optical axis is scanned in two dimensions as in the convergent light radiation four-dimensional method.

In this case, illumination of the object to be observed from a point away from the optical axis, that is, illumination of a light inclined toward the optical axis in place of illumination of a light parallel to the ordinary optical axis (hereinafter referred to as "oblique illumination") stores a real image observed on the detection plane. The light source point is then scanned in two dimensions and the observed image is stored in a data storage provided in the microscopic device for each time, for example. As described above, the data is expanded on the four-dimensional coordinates, which is a composite of the two-dimensional coordinates of the light source plane and the two-dimensional coordinates of the real image detection plane.

The convergent light radiation and parallel light radiation are compared to each other using an optical system configured by seven elements (three lenses and four optical planes). As shown in FIG. 3A, in the case of the convergent light radiation, the mathematics of the imaging process from the light source plane 111 to the detection plane 114 are in the order of $FT^{-1}$, FT, and FT. In contrast, as shown in FIG. 3B, in the parallel light radiation, corresponding to the reverse movement of light, the mathematics of the imaging process from the light source plane 21 to the detection plane 24 are in the order of FT, FT, and $FT^{-1}$.

The four-dimensional image obtained by the critical illumination is then represented by the following equation 5, using the probe function p(r) of the radiated light represented by the following equation 3 and the object transmission function t(r) represented by the following equation 4. The probe function p(r) and the object transmission function t(r) are both complex numbers.

[Equation 3]

$$p(\boldsymbol{r}) = |p(\boldsymbol{r})|\, e^{i2\pi\theta_p(\boldsymbol{r})}$$

[Equation 4]

$$t(\boldsymbol{r}) = |t(\boldsymbol{r})|\, e^{i2\pi\theta_t(\boldsymbol{r})}$$

[Equation 5]

$$\overline{p(\boldsymbol{r}_s - \boldsymbol{r})\, t(\boldsymbol{r})}^{\,r} \equiv U_C(\boldsymbol{r}_s, \boldsymbol{s}_d) \qquad (\text{FT·PAIR·COORDINATES·OF·}r\text{·IS·}s_d)$$

In contrast, the four-dimensional image obtained by the Koehler illumination is expressed by the following equation 6.

[Equation 6]

$$\overline{P(\boldsymbol{s})\, T(\boldsymbol{s}_s + \boldsymbol{s})}^{\,-s} \equiv U_K(\boldsymbol{s}_s, \boldsymbol{r}_d) \qquad (\text{FT·PAIR·COORDINATES·OF·}s\text{·IS·}r_d)$$

Here, the diaphragm function P(s) in the above equation 6 is expressed by the following equation 7, which is connected to the radiation light probe function by the Fourier transform FT. T(s) is the FT of the object transmission function expressed in the following equation 8. P(s) and T(s) are both complex numbers.

[Equation 7]

$$P(s) = \int dr \, e^{-i2\pi s \cdot r} p(r) = |P(s)| e^{i2\pi \Theta_p(s)}$$

[Equation 8]

$$T(s) = \int dr \, e^{-i2\pi s \cdot r} t(r) = |T(s)| e^{i2\pi \Theta_t(s)}$$

The differential phase amount in the four-dimensional method with the critical illumination and the four-dimensional method with the Koehler illumination are expressed by the equations 9 and 10, respectively, using the equations 2 to 8 above.

[Equation 9]

CENTER OF GRAVITY s OF
CRITICAL ILLUMINATION

$$: \langle s_d \rangle = \int ds_d \, s_d \, |U_C(r_s, s_d)|^2 \bigg/ \int ds_d \, |U_C(r_s, s_d)|^2$$

$$= \frac{-|p(r_s)|^2 \, \theta_p'(r_s) \otimes |t(r_s)|^2 + |p(r_s)|^2 \otimes |t(r_s)|^2 \, \theta_t'(r_s)}{|p(r_s)|^2 \otimes |t(r_s)|^2}$$

IN EQUATION, ⊗ REPRESENTS COMPOSITE INTEGRATION

[Equation 10]

CENTER OF GRAVITY s OF
KOHLER ILLUMINATION

$$: \langle s_s \rangle = \int ds_s \, s_s \, |U_K(s_s, r_d)|^2 \bigg/ \int ds_s \, |U_K(s_s, r_d)|^2$$

$$= \frac{-|p(r_d)|^2 \, \theta_p'(r_d) \otimes |t(r_d)|^2 + |p(r_d)|^2 \otimes |t(r_d)|^2 \, \theta_t'(r_d)}{|p(r_d)|^2 \otimes |t(r_d)|^2}$$

IN EQUATION, ⊗ REPRESENTS COMPOSITE INTEGRATION

In the equations 9 and 10 above, the numerator represents the first-order moment and the denominator represents the surface integral corresponding to the signal intensity. Also, the division corresponds to the center of gravity, and the computations are referred to as the center of gravity integration.

The equation 9 above for the center of gravity sd includes both the derivative $\theta_t'(r)$ of the phase component of the transmission coefficient, and the derivative, $\theta_p'(r)$ of the phase component of the probe function. This is the same equation as the one first derived in the world by Waddell et al. (see non-patent document 1) although the differential sign, for example, is slightly different. In contrast, the equation of the center of gravity of ss shown in the equation 10 above was discovered by the present inventor, and the present application has found it the first in the world. When the equations 9 and 10 are compared to each other, it can be recognized that the differential representation of the transmission coefficient and the phase component of the probe function give the same expression, except for the difference of whether the real coordinate $r_s$ in the light source plane is a variable or the real coordinate $r_d$ in the detection plane is a variable.

This result shows analytically that the light fields of the two four-dimensional methods shown in FIGS. 3A and 3B are equivalent in terms of reverse movement of light, and that the object scanning four-dimensional method of convergent light proposed by Waddell et al. can be substituted for the point light source on the light source plane scanning four-dimensional method using parallel light radiation. When the probe function p(r) is considered, since the probe function of the microscope is centrally symmetric in most cases, the phase derivative θ'p(0) is 0, and both the center of gravity $s_d$ and the center of gravity $s_s$ are represented by using only the derivative of the phase component θ(r) of t(r). However, the derivative used in the parallel light radiation four-dimensional microscope observation method of the present invention is directed to a two-dimensional first-order derivative, i.e., the gradient shown in the following equation 11, where θ' (r) is expressed by the following equation 12.

[Equation 11]

$$\frac{d}{d\boldsymbol{r}} = \left( \frac{\partial}{\partial x}, \frac{\partial}{\partial y} \right)$$

[Equation 12]

$$\theta'(\boldsymbol{r}) = \frac{d}{d\boldsymbol{r}}\theta(\boldsymbol{r}) = \left( \frac{\partial\theta(\boldsymbol{r})}{\partial x}, \frac{\partial\theta(\boldsymbol{r})}{\partial y} \right)$$

If the probe function p(r) is a convergent light stopped down in a δ-functional manner, the equation 9 and equation 10 above are attributed to the following equation 13 and equation 14, respectively.

[Equation 13]

$$\langle \boldsymbol{s}_s \rangle_\delta \cong \theta_t'(\boldsymbol{r}_d) + (\text{CONSTANT})$$

[Equation 14]

$$\langle \boldsymbol{s}_d \rangle_\delta \cong \theta_t'(\boldsymbol{r}_s) + (\text{CONSTANT})$$

From the above, it can be recognized that the differential phase of the object to be observed can be obtained by calculating the s-center of gravity as shown in the equations 9 and 10 for both the four-dimensional microscopic data under critical illumination and the four-dimensional microscopic data under Koehler illumination. To obtain θ(r) (one dimension) from the experimentally obtained θ'(r) (two dimensions), a line integral operation shown in the equation 15 below may be performed according to the usual method for obtaining the potential from the gradient.

[Equation 15]

$$\theta(\boldsymbol{r}) = \int_C \left( dx \frac{\partial \theta(\boldsymbol{r})}{\partial x} + dy \frac{\partial \theta(\boldsymbol{r})}{\partial y} \right)$$

In the above equation 15, the integration route C is, for example, directed to a straight line $(x, y_i)$ parallel to the x-axis from a certain starting point $r_i = (x_i, y_i)$, and a straight line $(xf, y)$ parallel to the y-axis at the end point $(xf, y_i)$ of that straight line $(x, y_i)$ such that the end point is directed to point $r_f = (x_f, y_f)$ to be obtained.

Moreover, when calculating the center of gravity (center of gravity s) of the frequency space in the equation 9 and equation 10 above, the intensity information of t(r) shown in the equation 16 below is obtained as the total integral of the optical field squared detection appearing in the denominator so that both the optical information, phase and intensity of both the object to be observed and the probe are obtained.

[Equation 16]

$$\int ds_d \, |U_C(\boldsymbol{r}_s, \boldsymbol{s}_d)|^2 \cong |t(\boldsymbol{r}_s)|^2 \quad , \qquad \int ds_s \, |U_K(\boldsymbol{s}_s, \boldsymbol{r}_d)|^2 \cong |t(\boldsymbol{r}_s)|^2$$

[Apparatus Configuration]

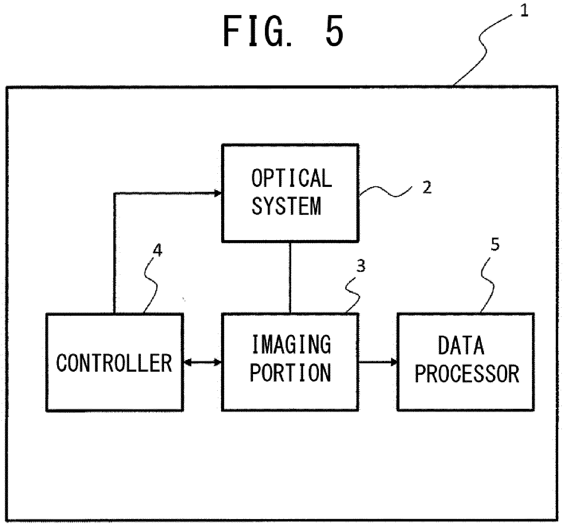

FIG. 5 is a block diagram illustrating a configuration example of the transmission microscopic apparatus according to a first embodiment of the present invention. The microscope observation method described above can be performed, for example, as shown in FIG. 5, with a transmission microscopic apparatus 1 including an optical system 2, an imaging portion 3 for detecting the formed two-dimensional image, a controller 4 for controlling light source scanning, for example, and a data processor 5 for storing, accumulating, and processing calculations of the four-dimensional image data. The optical system 2 includes a light source and an imaging system using, for example, a plurality of lenses that embody the optical system illustrated in FIGS. 1 to 4.

Although the arrangement of the diaphragm and the object to be observed differ between the four-dimensional convergent light radiation method proposed by Waddell et al. shown in FIG. 1 and the four-dimensional parallel light radiation method of the present invention shown in FIG. 4, the basic configuration of the optical system 2 of the transmission microscopic apparatus 1 according to the present embodiment is the same as that of the four-dimensional convergent light radiation method proposed by Waddell et al. In addition, a two-dimensional detector may be used in the imaging portion 3.

When a current microscope is modified for four-dimensional observation, the four-dimensional convergent light radiation method can be embodied by detecting diffraction circles on the detection plane of a confocal microscopic apparatus and combining the two-dimensional data with two-dimensional scanning on the object to create four-dimensional data. In contrast, the four-dimensional microscope observation method using parallel light radiation according to the present embodiment can be embodied by detecting a real image on the detection plane of a normal transmission microscopic apparatus and combining the two-dimensional data with the two-dimensional scanning of a point light source on the light source plane to create four-dimensional data.

As described in detail above, the microscope observation method according to the present embodiment is directed to a four-dimensional parallel light illumination method, and since the real image is set as a primary object to be observed, the intensity image and differential phase image of the object to be observed can be easily acquired with high accuracy and sensitivity. In addition, the transmission microscopic apparatus according to the present embodiment can be embodied by modifying the ordinary transmission microscopic apparatus, and thus the microscope operation is easy.

(Second Embodiment)

Next, a four-dimensional microscope observation method according to a second embodiment of the present invention will be described. The four-dimensional microscope observation method using the parallel light radiation according to the first embodiment above requires an extremely large data volume and a long observation time to acquire four-dimensional data, as well as the four-dimensional method using the convergent light radiation. To fundamentally solve this problem, a dimensionality reduction technique that reduces the dimension of the observation method is needed. Accordingly, the four-dimensional microscope observation method according to the present embodiment applies the following three of the dimensional reduction techniques.

One method of embedding four-dimensional data in two dimensional data is to use a light field camera (Ren Ng, Marc Levoy, Mathieu Bredif, Gene Duval, Mark Horowitz, Pat Hanrahan, "Light Field Photography with a Hand-held Plenoptic Camera," Stanford Tech Report CTSR 2005-02, pp.1-11), which was developed at Stanford University several years ago. The light field camera has a microlens array on the imaging surface and a microdetector array behind it, and the diffracted light of each microlens is detected by the corresponding microdetector. This allows the light field camera to map different line of sight directions to different points on the microdetector.

In the light field camera, the sight directional decomposition is used for the post-focusing readjustment to embody the three-dimensional imaging, which is referred to as refocusing. Since the sight directional decomposition corresponds to the light source directional decomposition from the viewpoint of the four-dimensional method, however, the light field camera image contains information of the four-dimensional parallel light radiation method. Accordingly, depending on the observation conditions, the differential phase image can be calculated from the data of the entire detector configured by the microdetectors.

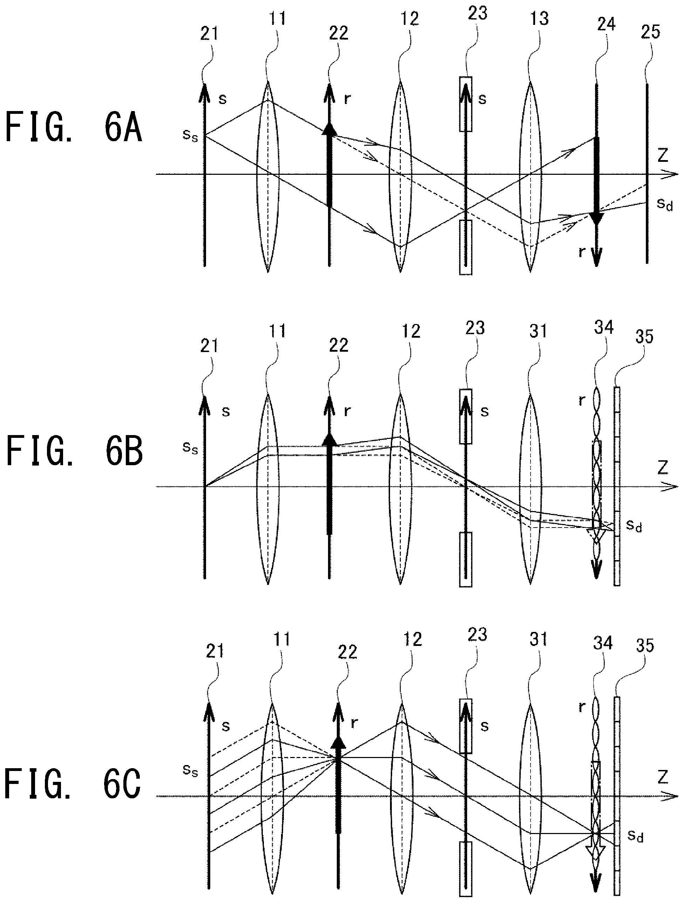

FIGS. 6A to 6C illustrate the imaging process of four-dimensional microscope observation method using the parallel light radiation according to the present embodiment using the light field camera. FIG. 6A corresponds to the ray diagram in FIG. 4 and illustrates how the ray deflection by the object to be observed (object surface 22) causes a change on the diffraction plane 25 located behind the detection plane 24. In FIG. 6A, the dashed line shows the state of the light in the case of no deflection, and the solid line shows the state of the light in the case of deflection. From FIG. 6A, the light point movement on the diffraction plane 25 located behind the detection plane 24 is recognized.

The amount of the movement is proportional to the differential phase of the object to be observed at the point of passage of the light beam, as already mentioned. However, since the entire object to be observed is irradiated in parallel, a number of the light beams passing through the adjacent portions overlap on the diffraction plane 25 in a state where they are deflected in different directions, and individual light point movements cannot be obtained. To avoid this overlap, a microlens array used in the light field camera may be placed on the detection plane 24.

FIG. 6B illustrates a configuration in which a point light source located on the optical axis of a microscope radiates parallel lights (hereinafter, referred to as a "point light source on the optical axis"). In FIG. 6B, a main lens 31 of the light field camera is disposed so as to substitute the objective lens 13, and a microdetector array 35 is disposed behind the microlens array 34. An image is then formed on the microlens array 34, and a diffraction image is formed on each microdetector of the microdetector array 35 corresponding to each microlens. In FIG. 6B, the solid line shows the case where the light flux from the point light source is deflected by the object to be observed, and the dashed line shows the case where the light flux is not deflected by the object to be observed, illustrating how the light flux is converged by the microlens array 34 to different positions on the microdetector array 35.

In the configuration shown in FIG. 6B, the problem of the configuration shown in FIG. 6A, i.e., the overlap of the light points on the detection plane created by light beams passing between the adjacent points, is solved by observing the separation of adjacent points with a microlens. In the configuration shown in FIG. 6B, the diffraction plane where the light source plane 21 and the microdetector array 35 are placed is conjugate, and the light beams of the point light source converge to one point of the microdetector. The amount of movement of the convergence point gives the differential phase. In this configuration, the coordinates of the microlens correspond to the real image coordinates and the coordinates on the microdetector correspond to the frequency coordinates, allowing the four-dimensional data to be easily obtained.

FIG. 6C shows the configuration corresponding to FIG. 3B, in which a light field camera is arranged in place of an objective lens, and diffracted light is projected onto a microdetector. The original light-field microscope for refocusing is directed to this method, which uses a surface light source. The diffracted image on the microdetector forms a diffracted light circle by the surface light emission. The light from different light sources during the surface light emission receives the same light deflection when passing through a specific point of the object to be observed, moving the diffracted light circle.

Obtaining the amount of movement acquires the differential phase in the same way as in the light point movement illustrated in FIG. 6B. The differential phase amount can be obtained by calculating the center-of-gravity coordinates of the diffracted image on the microdetector, regardless of the size of the light source, since the amount of the light point movement in FIG. 6B and the diffracted light circle movement in FIG. 6C can be obtained by the same calculation. From the above, it can be recognized that the use of the light field camera allows the differential phase amount of the four-dimensional data to be simultaneously and completely obtain obtained by a single imaging independent of the size of the light source.

In addition, both the four-dimensional light field camera microscopic method using the point light source on the optical axis shown in FIG. 6B (hereinafter, referred to as the "differential phase light field microscopic method") and the differential phase light field microscopic method using the surface light source shown in FIG. 6C give the same differential phase image for a transparent object to be observed without absorption components. Especially, for an object to be observed that has an absorption component and is thick, the real image on the microlens array 34 becomes a projected image, generating intensity variation caused by the absorption component depending on the projection direction. Accordingly, the unevenness of the intensity gives an additional center-of-gravity shift to the calculation of the center of gravity of the diffracted light circle.

Using a point light source with a single projection direction of the object to be observed as shown in FIG. 6B avoids this problem. When the adjustment function of the aperture diaphragm is used, the differential phase light field microscopic method on the optical axis using the point light source shown in FIG. 6B is automatically achieved by using a point light source illumination that narrows the surface light source to a point light source. In the currently widespread Koehler illumination method, the light source area of the surface light source can be freely changed from the minimum (corresponding to a point light source) to the maximum (corresponding to a wide surface light source) by adjusting the aperture diaphragm.

Therefore, the use of the microdetector array with the microlenses stacked in the microscopic apparatus allows the four-dimensional data configured by multiple images corresponding to different oblique illuminations to be simultaneously and completely imaged without scanning. This reduces the dimension from four-dimensional observation to two-dimensional observation. In this method, however, the amount of data is insufficient since four-dimensional data is acquired in one two-dimensional detection, causing a trade-off between the field of view, image resolution, and differential phase resolution. Accordingly, all of them cannot be simultaneously optimized.

For example, Robert Prevedel et al. achieved a resolution of about 7 $\mu$m in the depth direction by using a microlens of 150 $\mu$m on one side, and a microdetector with a 40x main lens, a resolution of 3.75 $\mu$m in the plane direction, and 15x15 pixels (see Robert Prevedel et al., "Simultaneous whole-animal 3Dimaging of neuronal activity using light-field microscopy," Nature Methods, vol. 11, 2014, p. 727-730). With the light-field microscope of Robert Prevedel et al., although the resolution in the surface direction can be increased by a factor of 2.5 using, for example, a 100x main lens, the field of view is reduced by a factor of 2.5. As described above, in the differential phase light-field microscope, the depth information of the original light-field microscope corresponds to the differential phase information, causing a trade-offs among the field of view width, image resolution, and differential phase resolution.

[Apparatus Configuration]

The transmission microscopic apparatus according to the present embodiment, i.e., the apparatus which embodies the four-dimensional simultaneous and complete microscope observation method described above, may be configured to include an imaging portion in which a light source control system which can control the light source area is provided and the scanning control system is omitted in the controller 4, which imaging portion includes an optical system of a normal transmission microscope and a light field camera. The apparatus also includes a data processor, which stores four-dimensional image data and performs calculation processing. The two-dimensional data supplied from the light field camera is processed by the data processor as follows.

<Step 1: Create Four-Dimensional Data>

The position of the microlens corresponds to the real coordinates $r_d$, and the position of the pixel of the microdetector behind each microlens corresponds to the frequency coordinates $s_s$, configuring the real-image four-dimensional data $U_K (s_s, r_d)$.

<Step 2: Integral Operation>

The real-image four-dimensional data obtained in step S1 is then area-integrated with respect to the coordinates ss to obtain the intensity image. Alternatively, the real-image four-dimensional data obtained in step S1 is subjected to a center-of-gravity integration with respect to the coordinates ss, i.e., the primary moment is calculated with respect to the coordinates ss and divided by the intensity image to obtain a differential phase image.

As described in detail above, the microscope observation method and the transmission microscopic apparatus according to the present embodiment can significantly reduce the amount of data and facilitate the operation of the microscope since the real image appearing on the microlens array is observed as the primary object to be observed. Further, the intensity image and the differential phase image of the object to be observed can be acquired in real time since the high-speed computation of the surface integral and the center of gravity integral is performed simultaneously. In the present embodiment, the configuration and effects other than the above are the same as those of the first embodiment described above.

(Third Embodiment)

Next, a four-dimensional microscope observation method according to a third embodiment of the present invention will be described. In the four-dimensional microscope observation method using the light field camera described above, a four-dimensional image is acquired by a single two-dimensional detection, limiting the amount of data to be acquired to some extent. Therefore, in the microscope observation method according to the present embodiment, the scanning dimension reduction method, which has both the advantages of the scanning four-dimensional method of the first embodiment, i.e., "high resolution," and the advantages of the microlens array-based four-dimensional method of the second embodiment, i.e., "low dimensionality," is applied.

As mentioned above, the original function of the light field camera is to acquire depth information and refocus an object after imaging. The function of refocusing after imaging can also be achieved by performing multi-focus shooting, i.e., by taking multiple pictures in different focuses and storing the image data as three-dimensional data in an external storage device. In this case, the data is configured by multiple pictures that are focused on different depths of the object to be observed, and thus configure three-dimensional data.

In terms of information, the four-dimensional data of the light field camera and the multi-focus three-dimensional data have the same contents. Accordingly, the four-dimensional data acquired by the light field camera and the multi-focus three-dimensional data can be mathematically transformed in some way. Although the data are mathematically equivalent, technically, the multi-focus three-dimensional data is superior in that the amount of data is not limited, since each photo with a different focus is imaged by an ordinary two-dimensional digital light receiver without a microlens.

For the 3D-4D conversion described above, for example, a method of converting four-dimensional data imaged by the light field camera images and three-dimensional data imaged based on multi-focus settings for the same object to be observed using the projection-section theorem, which is the basis of computer tomography, has already been proposed (Kazuya Kodama and Akira Kubota, "Efficient Reconstruction of All-in-Focus Images Through Shifted Pinholes from Multi-Focus Images for Dense Light Field Synthesis and Rendering", IEEE Trans. Image Processing, Vol. 22, 2013, pp. 4407-4421). Use of the conversion method allows the microscope observation method according to the present embodiment to be equivalent to the scanning four-dimensional microscopic method according to the first embodiment without the data amount limitation.

Specifically, the transmission microscopic apparatus according to the present embodiment acquires multi-focus three-dimensional data configured by a plurality of two-dimensional images with different foci by attaching an imaging unit with a surface light source and an electrically controlled focusing mechanism to a known transmission microscopic apparatus including a collector lens system with an aperture diaphragm. Since the transmission microscope according to the present embodiment acquires three-dimensional data in place of four-dimensional data, the imaging time and image storage capacity required for data collection can be greatly reduced.

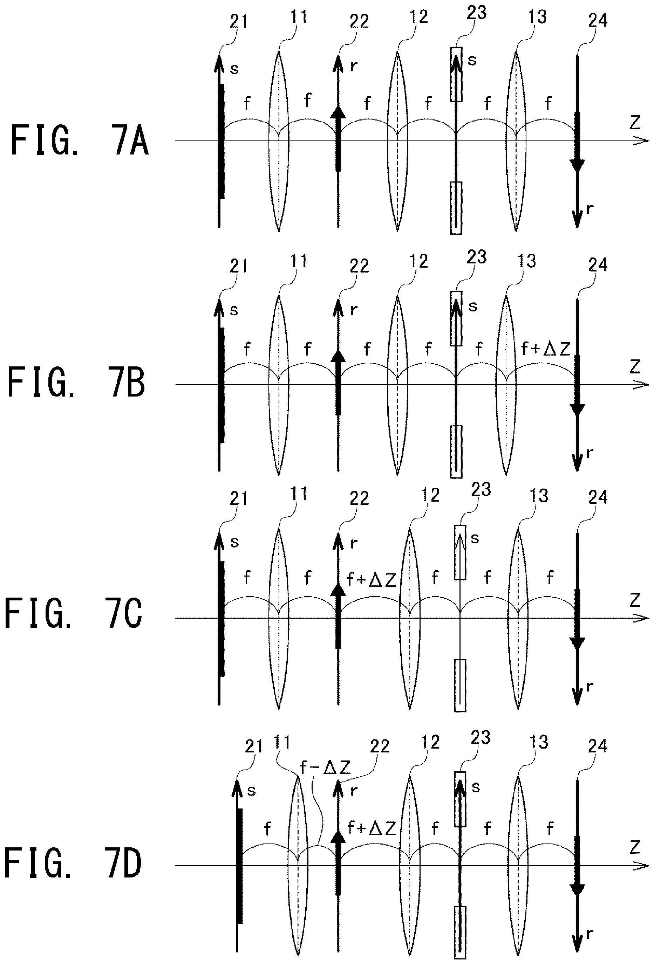

A great difference is present between the focusing range of an object, which is assumed by a light field camera, and the focusing range assumed by a microscope for observing small objects (the depth range of the former is wider), and this needs to be considered. The basics of multi-focus three-dimensional data acquisition by using the 3-lens 4 optical plane 6-focus optical system shown in FIG. 2 will be considered. FIGS. 7A through 7D are schematic diagrams illustrating an example of embodying multi-focusing in the real-image four-dimensional microscope observation method according to the present embodiment (hereinafter, referred to as the "differential phase multi-focus microscopic method") based on FIG. 2. FIG. 7A illustrates a focus-shifting method to embody multi-focusing by shifting the focus of the objective lens, FIG. 7B illustrates a detection plane-shifting method to embody multi-focusing by shifting the detection plane, FIG. 7C illustrates a surface-shifting method to embody multi-focusing by shifting the object surface while fixing the distance between the first lens and the object surface, and FIG. 7D illustrates a surface-shifting method to embody multi-focusing by shifting only the object surface while fixing the distance between the first lens and the second lens.

The method of setting the focal length of the objective lens shown in FIG. 7A is one of the methods of setting the multi-focus in the differential phase multi-focus microscopic method using a surface light source. The method is employed in electron microscopes that use electromagnetic lenses to take multiple images with different foci and create a group of three-dimensional multi-focus images. The method cannot be employed when glass lenses are used, such as in ordinary cameras, since the focal length of each lens is fixed. In this case, the method can be embodied by changing the distance between the third lens 13 and the detection plane 24 shown in FIG. 7B. Specifically, the direction of the focus shift $\Delta z$ is changed to a positive or negative direction, and multiple images are imaged to create a three-dimensional multi-focus image group.

With a microscope, the position of the object to be observed can be freely changed in a manner different from that of a camera, and thus the focus can be shifted on the object side. In this case, the focus shift can be achieved by changing the distance between the object and the second lens 12 as shown in FIG. 7C. In addition, the direction of the focus shift $\Delta z$ shown in FIG. 7D is changed to a positive or negative direction, and multiple images are imaged to create a three-dimensional multi-focus image group. In the example of FIG. 7C, although the distance between the object to be observed (the object surface 22) and the first lens 11 is fixed to the focal length, as in FIG. 7D, all seven elements can be fixed, only the object to be observed (the object surface 22) can be moved and the direction of the focus shift $\Delta z$ can be changed in a positive or negative direction, and multiple images can be imaged to create a three-dimensional multi-focus image group.

In order to incorporate the multi-focus settings simply and abstractly shown in FIGS. 7B to 7D into an actual microscopic apparatus, it is necessary to experimentally devise the settings for each target device. However, since the movement of each element of the optical system is computer-controlled in the current digital microscope, in any of the cases shown in FIGS. 7B to 7D, the imaging of images linked to the multi-focus settings can be fully automated by modifying the control program of the focusing mechanism specific to the digital microscope without adding an imaging portion with a focusing mechanism.

The three-dimensional data obtained by the surface light source differential phase multi-focus microscopic method according to the present embodiment is numerically converted to an intensity image or differential phase image through four-dimensional data conversion in the data processor installed in the transmission microscopic apparatus, for example. For example, the conversion process in the data processor can be carried out by a program that executes the following steps.

<Step S1: Fourier Transform>

A multi-focus three-dimensional real image is transformed into a three-dimensional frequency image by a three-dimensional Fourier transform.

<Step S2: Creating Four-Dimensional Data>

A large number of frequency space sections perpendicular to the diaphragm direction from the surface light source are cut out from the three-dimensional frequency image, and a two-dimensional inverse Fourier transform is performed to obtain a two-dimensional real image corresponding to oblique light illumination. Since the vertical cross-section in the oblique illumination direction corresponds to the light source coordinates by one-to-one, the set of two-dimensional inverse Fourier transform data configures the real image four-dimensional data $U_K (s_s, r_d)$.

<Step S3>

The actual-image four-dimensional data obtained in step S2 is then area-integrated with respect to the coordinates $s_s$ to obtain the intensity image. Alternatively, the real-image four-dimensional data obtained in step 21 is subjected to a center-of-gravity integration with respect to the coordinates $s_s$, i.e., the primary moment is calculated with respect to the coordinates $s_s$ and divided by the intensity image to obtain a differential phase image.

The way to set the minimum shifting width and the range of shifting for the focus shifting are considered as follows, returning to the basic properties of the frequently used Fourier transform. Since the minimum shift width in the real space corresponds to the frequency range in the frequency space, the range of the light source coordinates, i.e., the maximum deflection visual range, which is the frequency correspondence of the differential phase multi-focus microscopic method, is determined. Since the range of the real-space shift area corresponds to the frequency accuracy in the frequency space, the observation accuracy of the light source coordinates, i.e., the observation phase accuracy, which is the frequency correspondence of the differential phase multi-focus microscopic method, is determined. Therefore, the minimum shift width and shift area range of the focus shift are determined from the requirements for the range of phase differential and the observation accuracy desired to be obtained for each observation target.

[Apparatus Configuration]

The configuration of the apparatus for embodying the aforementioned microscope observation method, i.e., the transmission microscopic apparatus according to the present embodiment is the same as that of the microscopic apparatus 1 illustrated in FIG. 5, except that the point light source of the optical system 2 is substituted for the surface light source and instead of scanning the light source, the focus is shifted and the three-dimensional to four-dimensional transformation is performed by the data processor 5. The optical system of the transmission microscopic apparatus according to the present embodiment can follow the optical system of a conventional transmission microscope, and a two-dimensional detector can be used for the imaging portion. The data processor converts the three-dimensional data into four-dimensional data and performs the arithmetic processing to calculate the surface integral and the center-of-gravity integral, and finally obtains the intensity image and the differential phase image.

As described in detail above, the transmission microscopic apparatus according to the present embodiment shown in FIGS. 7A to 7D is a differential phase multi-focus microscope based on the multi-focus three-dimensional observation, and is an extension of the transmission microscopic apparatus using the parallel light radiation. Accordingly, the transmission microscopic apparatus does not perform scanning, unlike the scanning microscopic method using the convergent light by the critical illumination, and thus the apparatus can be simplified. In addition, the microscope observation method and the transmission microscope according to the present embodiment can simplify the microscopic apparatus and facilitate the operation of the microscope since the primary object to be observed is a real image.

Further, since the microscope observation method and the transmission microscope according to the present embodiment are for acquiring three-dimensional data only by the operation in the depth direction relying on the multi-focus mechanism, the imaging is faster and the amount of data is compressed compared with the four-dimensional data acquisition by the two-dimensional point light source scanning. As a result, the microscope observation method and the transmission microscopic apparatus according to the present embodiment can acquire the intensity images and differential phase images of an object to be observed with high speed and ease while maintaining accuracy. In the present embodiment, the configuration and effects other than the above are the same as those of the first or second embodiment described above.

(Fourth Embodiment)

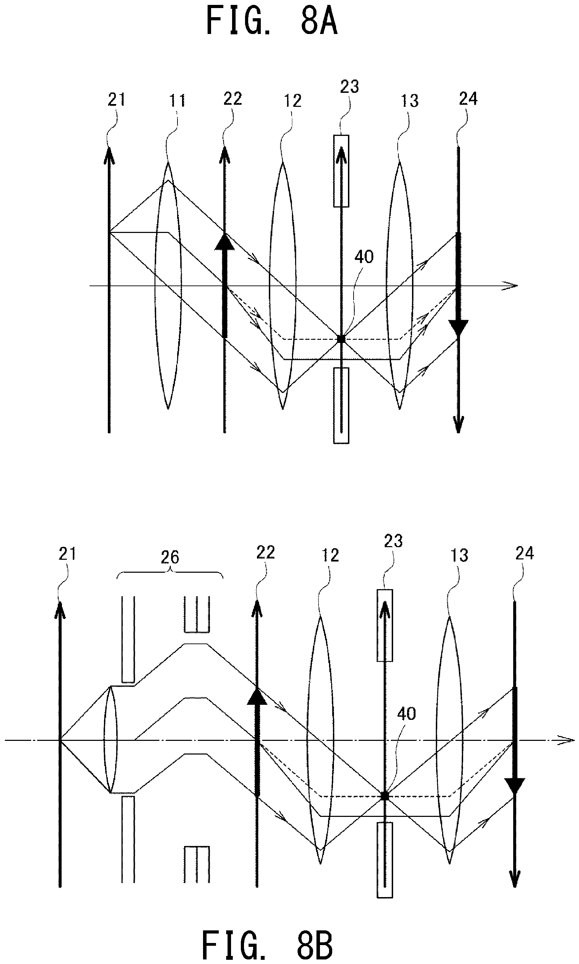

Next, a microscope observation method according to a fourth embodiment of the present invention will be described. Although the first to third embodiments described above describe a four-dimensional microscope observation method using the bright field method, the present technique can also be applied to the dark field method. FIGS. 8A and 8B illustrate the imaging process in the four-dimensional microscope observation method according to the present embodiment, where FIG. 8A is an example of the configuration when applied to an optical microscope and FIG. 8B is an example of the configuration when applied to an electron microscope.

In the case of the optical microscope, as shown in FIG. 8A, each of three lenses 11 to 13 is arranged between a corresponding pair of four optical planes: the light source plane 21, the object plane 22, the diaphragm plane 23, and the detection plane 24. The light ejected from any point on the light source plane 21 passes through the first lens 11 and strikes the object to be observed as oblique parallel light. The light is divided into two components, one that is scattered by the object (shown by solid line) and the other that is not scattered (shown by dashed line).

The non-scattered component appears on the detection plane 24 as so-called background light and is focused on a conjugate point on the diaphragm plane 23, which is conjugate with the light source plane. Therefore, in the microscope observation method according to the present embodiment, a beam stopper 40 is placed at the light source conjugate point to shield all of the components to remove the background light. Since the light deflected by the material (the object to be observed) passes through a position shifted from the light source conjugate point of the diaphragm plane 23, it is not shielded by the beam stopper 40. This allows a dark field image configured by only the scattering component to be created on the detection plane 24. The dark field image in this case corresponds to a component of the scattered component that particularly bypasses the beam stopper 40 by deflection, and the real coordinates of the dark field image are recorded in the form in which the real coordinates of the dark field image are tagged to the light source coordinates on the light source plane 21.

The coordinates of the light source in two dimensions are scanned to obtain four-dimensional data. The differential phase of the real coordinates of the dark field image can be obtained by performing the algorithm described above on the obtained four-dimensional data, i.e., the calculation of the center of gravity in the light source coordinates. In the microscope observation method according to the present embodiment, since only the scattered component retains information on the differential phase and the background light has only a role as a noise source, the sensitivity is improved by removing the background light. However, this method also requires conjugate scanning of the beam stopper 40 since the diaphragm plane focusing point of the background light is scanned in conjunction with the scanning of the light source point.

Since it is difficult to fabricate a point light source array in the case of an electron microscope, as shown in FIG. 8B, the method of fixing the point light source to the optical axis and producing oblique illumination using a deflection coil 26 is applied to replace the point light source scanning by scanning the oblique illumination in the oblique direction. Since the background light is a transmitted light with no deflection and makes a strong conjugate image at the light source conjugation point $p_2$ on the diaphragm plane 23, the background light can be removed by placing a beam stopper 40 with an appropriate size at this light source conjugation point. In this case, the conjugate scanning of the beam stopper 40 is also needed.

[Apparatus Configuration]

The microscope observation method described above can be implemented by a transmission microscopic apparatus in the configuration shown in FIG. 5, for example. In the case of the optical microscope, a point light source array, for example, is provided in the optical system 2, and a stopper scanning control system conjugate with the point light source scanning control system of the point light source array for the light source scanning is provided in the controller 4. In the case of the electron microscope, a deflection coil is provided in the optical system 2 for converting the parallel light from the point light source on the optical axis to the oblique illumination and performing the scan in the oblique direction, and a stopper scanning control system conjugate with a deflection coil control system for performing oblique light scanning of the point light source on the optical axis is provided in the controller 4. In the data processor 5, arithmetic processing to calculate the surface integral and the center of gravity integral is then performed to finally obtain the differential phase image.

In the microscope observation method according to the present embodiment, a beam stopper is arranged at the focal point on the back focal plane of the objective lens for the parallel light emitted from the point light source to remove the background light, allowing a dark field image to be observed with high sensitivity. In the present embodiment, the configuration other than the above is the same as that of the first embodiment described above.

(First Variant of the Fourth Embodiment)

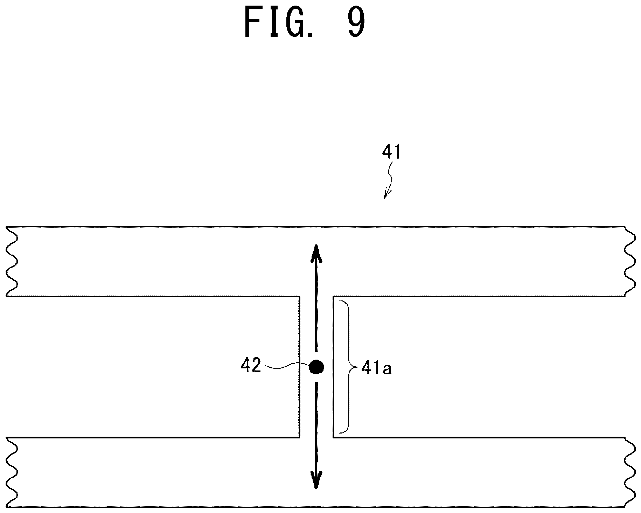

Next, a microscope observation method according to a first variant of the fourth embodiment of the present invention will be described. FIG. 9 illustrates an H-shaped slit used in the four-dimensional microscope observation method according to the present variant.

Especially in the electron microscopy of biological materials, a limit is present in the amount of electron radiation due to the electron-beam destruction problem. For example, 100 electrons per square angstrom is said to be the limit of the radiation dose for biomolecules. In the four-dimensional method, the resolution of the frequency space, which is an additional dimension, is needed, necessitating the normal two-dimensional observation 4096 times to obtain data with, for example, a 64x64 frequency mesh. Accordingly, the electron dose per observation (critical dose divided by the number of observations performed) is, for example, 1/4,096 of the normal two-dimensional observation, which is extremely small. In this case, image observation becomes almost impossible, and the operability of the microscope becomes worse.

To avoid the problem, the resolution of the frequency space may be reduced to a frequency mesh of 16x16 and the number of observations to 256 to obtain the data. However, this reduces the differential phase resolution to one-fourth. Therefore, a method to increase the amount of electron radiation at each observation execution without reducing the observation resolution is required.

Therefore, in the microscope observation method of this variant, a dimensionality reduction method is combined with the fourth embodiment, which is directed to a dark field four-dimensional observation method, to observe a dark field image. Specifically, in the microscope observation method according to the present embodiment, an optical element with an H-shaped slit 41 formed as shown in FIG. 9 is arranged on the diaphragm plane 23 of the optical system shown in FIG. 8B, a light source image 42 is adjusted so that the light source image 42 is positioned at a cross-linked portion 41a of the H-shaped slit 41, and the cross-linked portion 41a is scanned by the light source in one dimension or obliquely scanned by the deflection coil.

Here, the H-shaped slit 41 is directed to a slit in the shape of two mutually parallel straight plates connected by the cross-linked portion 41a, which serves as a stopper, and is formed in an optical element (diaphragm) made of a conductive material. In the case of the electron microscope, a strong background electron beam, which is conjugate with the light source, moves through the cross-linked portion 41a as the light source is scanned, and when the electrons hit the conductive portion of the cross-linked portion 41a, they flow through the periphery of the optical element to the ground, thus preventing charging. Also, the conjugate scanning of the beam stopper described above is not needed.

The center of gravity calculation for the three-dimensional data obtained by the method above is performed using the one-dimensional data obtained by the light source scanning or oblique light scanning at each point on the real image. The position of the center of gravity is the differential phase of the material (the object to be observed) corresponding to the electron beam scanning direction, and the two-dimensional image plotted at each point becomes the differential phase image corresponding to the scanning direction.

The configuration of the microscope observation method in this variant is the same as in the aforementioned fourth embodiment, except that the diaphragm of the optical system 2 is changed to the H-shaped slit 41 in this variant, and the computation for obtaining the differential phase is changed from a two-dimensional center-of-gravity integral to a one-dimensional one. If the same observation is made using a simple slit excluding the cross-linked portion 41a in the H-shaped slit, a bright field image is obtained in place of the dark field image.

(Fifth Embodiment)

Next, a microscope observation method according to a fifth embodiment of the present invention will be described. The microscope observation method of the fourth embodiment described above requires a two-dimensional scanning of the light source, which requires an extremely large four-dimensional data capacity and a long observation time to increase both the spatial resolution and the differential phase resolution. This problem can be solved by sacrificing the resolution and substituting the four-dimensional data acquisition with two-dimensional data detection by a microlens array, as in the microscope observation method of the second embodiment described above.

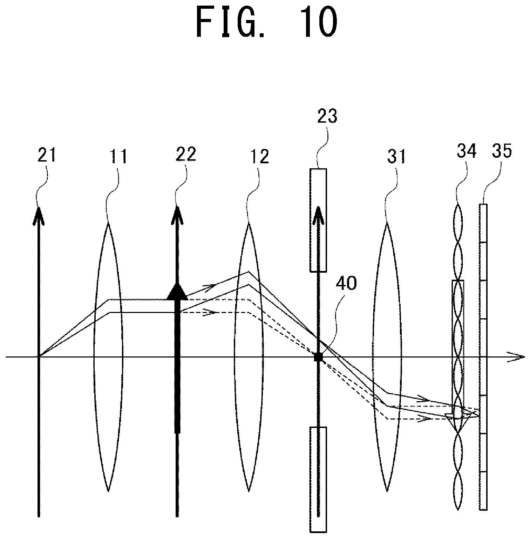

FIG. 10 is a diagram illustrating the imaging process in the four-dimensional microscope observation method according to the present embodiment. As shown in FIG. 10, the microscope observation method according to the present embodiment is a combination of the second embodiment and the fourth embodiment, and in the four-dimensional microscope observation method, in which the microlens array 34 omits the operation, a point light source is arranged on the optical axis and a beam stopper 40 is arranged on the optical axis of the back focal plane of the objective lens.

In the microscope observation method according to the present embodiment, since the light source on the optical axis is used, the stopper 40 need only be positioned (fixed) on the optical axis at all times and no scanning is required. In the microscopic apparatus according to the present embodiment, it is the same as in the fourth embodiment described above in that the light deflected by the material (the object to be observed) avoids the stopper 40 and reaches the detection plane 24.

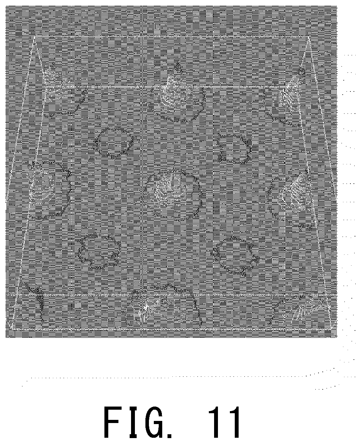

FIG. 11 is a contour line plot of a diffraction image of a renal tissue section on a microdetector array taken under a point light source illumination on an optical axis using a light field microscope on which a microlens array is mounted. On the microdetector array 35 arranged behind the microlens array 34, the superposition of a strong diffraction image derived from background light (large peak) spread out in the center of FIG. 11 and a moving diffraction image derived from scattered light (small peak) by an object (the object to be observed) can be seen. Even in such a case, the dark field method can remove the diffraction image derived from the background light, and thus the estimate of the center of gravity shift, which evaluates the degree of deflection of the diffraction image derived from the scattered light, can be accurate, improving the sensitivity in authoritative strong observation.

The microscope observation method according to the present embodiment can be implemented by a transmission microscopic apparatus, for example, which omits the control system involved in the scanning of the light source and the stopper, has a control system capable of controlling the area of the light source including the point light source, has a stopper 40 arranged on the optical axis of the diaphragm plane 23, uses a light field camera for the imaging portion 3, and stores and computes four-dimensional image data in the data processor 5. In this case, the two-dimensional data output from the light field camera is converted into four-dimensional data in the data processor 5, and the differential phase image is obtained by the same computation as in the fourth embodiment.

In the microscope observation method according to the present embodiment, the conjugate point of the light source, which is offset from the optical axis, is also offset from the optical axis in the aperture diaphragm, and if a deflection by an object (the object to be observed) is added to this offset, the light hits the diaphragm and is blocked. Accordingly, the light source is fixed on the optical axis and the diaphragm is scanned two-dimensionally so that the light source conjugate point is fixed on the optical axis and the stopper is also fixed. As a result, according to the microscope observation method of the present embodiment, a high-sensitivity dark field image can be obtained by performing a single two-dimensional scan on the diaphragm plane.

(Sixth Embodiment)

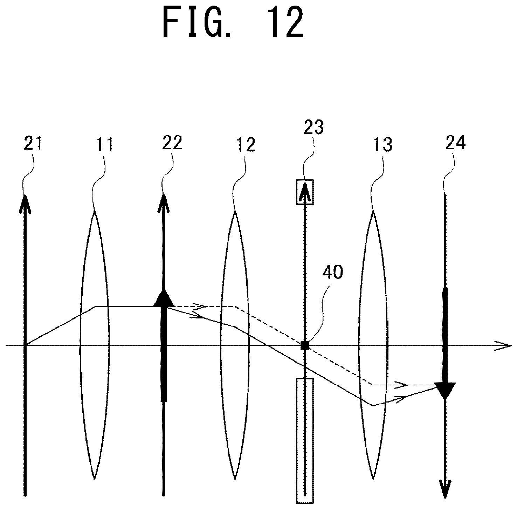

Next, a microscope observation method according to a sixth embodiment of the present invention will be described. FIG. 12 is a diagram illustrating the imaging process in the four-dimensional microscope observation method according to the present embodiment. Although two mechanical systems, i.e., a light source scanning and a stopper scanning conjugate with the light source scanning, are needed for the microscopic apparatus that embodies the dark field method in the fourth embodiment described above, major design changes are required to add these mechanisms to the microscope.

In contrast, since the essence of the four-dimensional differential phase method using the deflection described above is shielding by the diaphragm associated with the deflection, the scanning of the light source can be substituted for the scanning of the diaphragm. Accordingly, as shown in FIG. 12, in the microscope observation method according to the present embodiment, the diaphragm is two-dimensionally scanned and a two-dimensional real image is stored at each point of the scanning. Specifically, in the microscope observation method according to the present embodiment, from the point-symmetric conjugation of the light source plane 21 and the diaphragm plane 23, the scanning point coordinates of the diaphragm are point-symmetric with the light source coordinates shown in FIG. 8A, and the scanning two-dimensional coordinates and the real image two-dimensional coordinates configure the four-dimensional data.

When a dark field image is observed by the microscope observation method according to the present embodiment, the beam stopper 40 is fixed on the optical axis of the diaphragm plane 23, which is conjugate with an optical axis light source, as in the third embodiment described above. Although FIG. 12 shows an example of the diaphragm scanning method corresponding to the light source scanning method shown in FIG. 8A, the present invention is not limited to this method. The diaphragm scanning method corresponding to the oblique light scanning method shown in FIG. 8B may also be employed, and the same effect is obtained in this case.

The configuration of the transmission microscopic apparatus used in the microscope observation method according to the present embodiment is the same as that of the fourth embodiment described above except that the conjugate two-dimensional scanning control of the light source or oblique light and the stopper 40 in the controller 4 is changed to two-dimensional scanning control of the diaphragm. The calculation method for obtaining the differential phase in the microscope observation method according to the present embodiment is also the same as that in the fourth embodiment described above.

(First Variant of Sixth Embodiment)

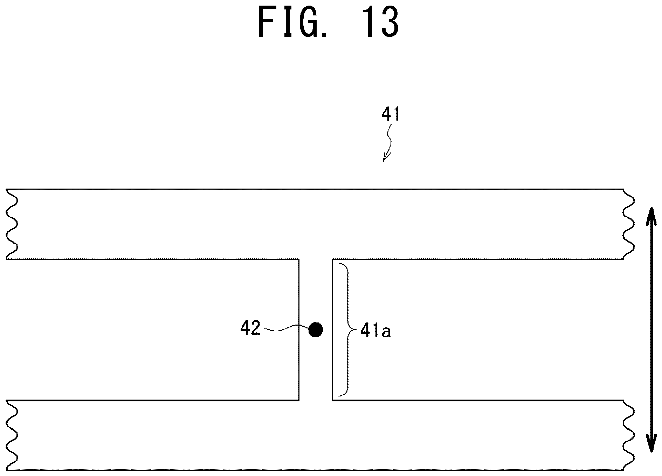

Next, a microscope observation method according to a first variant of the sixth embodiment of the present invention will be described. FIG. 13 illustrates an H-shaped slit used in the four-dimensional microscope observation method according to the present variant. The microscope observation method according to the present variant is based on the combination of the microscope observation method of the sixth embodiment and the dimensional reduction method described above. The H-shaped slit 41 shown in FIG. 13 is arranged in the diaphragm plane 23, and adjusted such that the light source image 42 is located at the cross-linked portion 41a of the H-shaped slit 41, and the diaphragm scanning is performed in the direction parallel to the cross-linked portion 41a in one dimension.

Since the one-dimensional center of gravity integral with respect to the frequency of these three-dimensional data gives the differential phase, the center of gravity calculation for the obtained three-dimensional data is performed with the one-dimensional data obtained by the light source scanning or oblique light scanning at each point on the real image. For the differential phase in the orthogonal dimensional direction, for example, the differential phase three-dimensional data in the orthogonal direction can be obtained by rotating the object to be observed by 90 degrees to either right or left, and the one-dimensional scanning observation is performed in the same manner. Alternatively, if two orthogonal three-dimensional data are used, the phase image can be obtained from an integral calculation combining the frequency center of gravity calculation and its results. The position of the center of gravity is the differential phase of the material corresponding to the diaphragm scanning direction, and the two-dimensional image plotted at each point is the differential phase image corresponding to the diaphragm scanning direction.

The configuration of the apparatus used in the microscope observation method according to the present embodiment is the same as that in the sixth embodiment described above except that the diaphragm of the optical system 2 is changed to the H-shaped slit. The computation for obtaining the differential phase is the same as that in the fourth embodiment described above except that the two-dimensional center of gravity integral is changed to one dimension.

The four-dimensional transmission microscopy in the above embodiments and variations thereof can be applied to all types of transmission microscopes using lenses, as well as microscopes using visible light and electron beams. Possible applications may include X-ray microscopy, UV microscopy, infrared microscopy, neutron microscopy, and ultrasound microscopy. In addition, since the microscope observation method according to the present invention does not use a phase plate, and thus has the following advantages over the current phase-contrast microscopic method that uses a phase plate based on the principle of the interfering action of waves.

<General Advantage>

Since no phase plate is used, the optical configuration is simple and free from life problems caused by the phase plate degradation and the error problems generated by the phase plate itself. Moreover, in comparison to the interferometry in general, since the interferometry is about the sum of the signal light and the strong reference light, the image always contains a much stronger background light than the signal, and the phase difference image is detected as the difference of the background signal. Since the present invention is directed to a quantification of the deflection of materials when they are transmitted, whether the light or electrons, the image is configured by only signal light, and unnecessary background light as seen in the interference method is not present. This improves the signal sensitivity (S/N ratio) much higher than that of the phase contrast method utilizing the interference.

<Individual Advantages of each Microscope>

Optical Microscopy in Visible, UV, and Infrared, for example: In the current phase contrast methods, errors such as haloes occur at the boundaries of large phase changes. Although various methods have been proposed to remove these errors, none of them is perfect. The differential phase light field microscopy and differential phase multi-focus microscopy are both halo-free. In addition, two typical methods, i.e., the phase contrast method and the differential interferometry with different optical configurations are used in the current phase contrast methods, and the present invention allows results of both of them to be obtained in a single experiment. Also, a differential interference image corresponding to the differentiation in any direction can be obtained in a single experiment.

The disadvantages of current methods using phase plates in electron, X-ray, and neutron microscopes are: (i) they can only be applied to weak phase objects; (ii) in the case of electron microscopes, the electron-induced charging of the phase plate causes image distortion and shortens the lifetime of the phase plate; and (iii) only elastically scattered electrons, X-rays, and neutrons, which cause interference, contribute to the image formation, and inelastically scattered electrons, X-rays, and neutrons become the background noise. In thicker samples, inelastically-scattered electrons, X-rays and neutrons outweigh the elastically-scattered electrons, X-rays and neutrons, and the phase contrast image has a low S/N ratio. The present invention is free from all these disadvantages, especially the S/N ratio of thick samples is remarkably improved since all of the elastically scattered electrons, X-rays and neutrons and inelastically scattered electrons, X-rays and neutrons are utilized for image formation.

[Example]

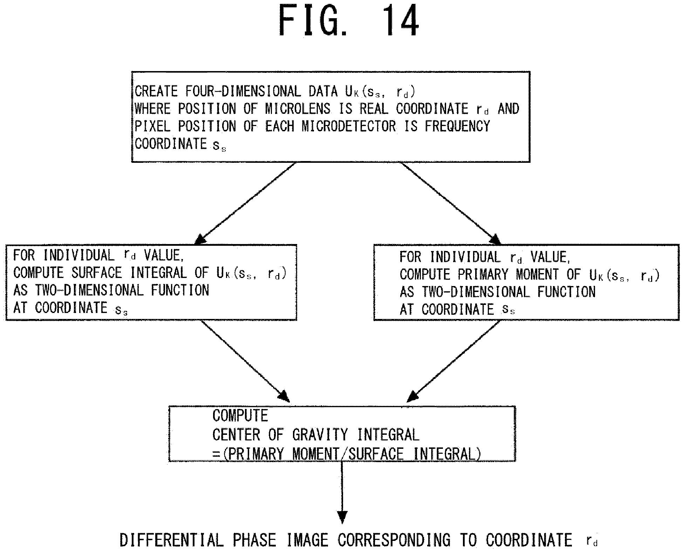

As an example of the present invention, a commercially available light field microscope was used to demonstrate a differential phase light field microscope according to the method of the second embodiment described above. FIG. 14 is a flowchart illustrating a data processing method used in an example of the present invention. The same flowchart of data processing is used for dimensionally reduced three-dimensional data.

The apparatus used in the experiments is configured by an Olympus upright microscope BX63 with a light field microscope attachment (PhaseView 3D Imaging Unit InSight) mounted. The Olympus upright microscope BX63 is a multi-functional microscope that can switch between bright field images and differential interference images, for example. A PhaseView 3D imaging unit (InSight) was mounted on the C-mount of the upright microscope, and the microlens of InSight was adjusted to be on the middle image plane of the Olympus microscope. The total diffracted image of the intermediate image formed on the microlens array was then transferred through the InSight relay lens onto a CMOS image sensor of a digital camera ORCA-Flash 4.0 V3 from Hamamatsu Photonics K.K. (2048x2048 pixels), and detected.

The microlens can be inserted into and removed from the intermediate image plane, and when it is withdrawn, the original function of the upright microscope is restored. In addition, the microlens is inserted in the bright field mode of the upright microscope to configure the light field microscope, and the observation was performed using a 40x objective lens (Olympus UPIanSApoX40 NA0.95). The 40x objective lens was also used for acquiring the bright field images and differential interference images. Although the resolution of these images is 2048x2048 pixels, coarse-grained images with 128x128 pixels were also created for comparison with low resolution light field microscope images.

The microlens array provided by InSight was configured such that 128 microlenses each with a diameter of 65 $\mu$m, are arranged vertically and horizontally. The number of pixels in the CMOS image sensor of the digital camera was 2048x2048, and the pixel size was 6.5 $\mu$m x 6.5 $\mu$m. In the light field microscope, the microlens corresponds to one pixel, and thus the image resolution is 65 $\mu$m/40 = 1.63 $\mu$m. Since the image formed by the microlens array is projected onto the CMOS of the digital camera, the diffracted image produced by each microlens is projected onto a 16x16 square pixel directly under the microlens, of which the pixel (10x10 pixels) for the circular center of the diffracted image was used.

That is, the microdetector in the present invention is configured by 10 vertical $\times$ 10 horizontal pixels on CMOS, with a total number of 128 vertical $\times$ 128 horizontal pixels, which is the same as the configuration of the microlens array. The depth resolution was 6 $\mu$m for the light field microscope with this configuration. The basic configuration of this optical system was almost the same as that of the light field microscope reported earlier by Robert Prevedel et al.

Samples (ThermoFisher Scientific, FluoCells F24630) of mouse kidney sections that were fluorescently stained in three colors were used as the objects to be observed. The thickness of the sections was 16 $\mu$m. Bright-field and differential phase images (low resolution) were observed on this sample using the data processing method shown in FIG. 14. As a comparative example, observation of the bright-field and differential interference images (high resolution), which is the original function of the upright microscope, and four-dimensional observations with a light-field microscope were performed.

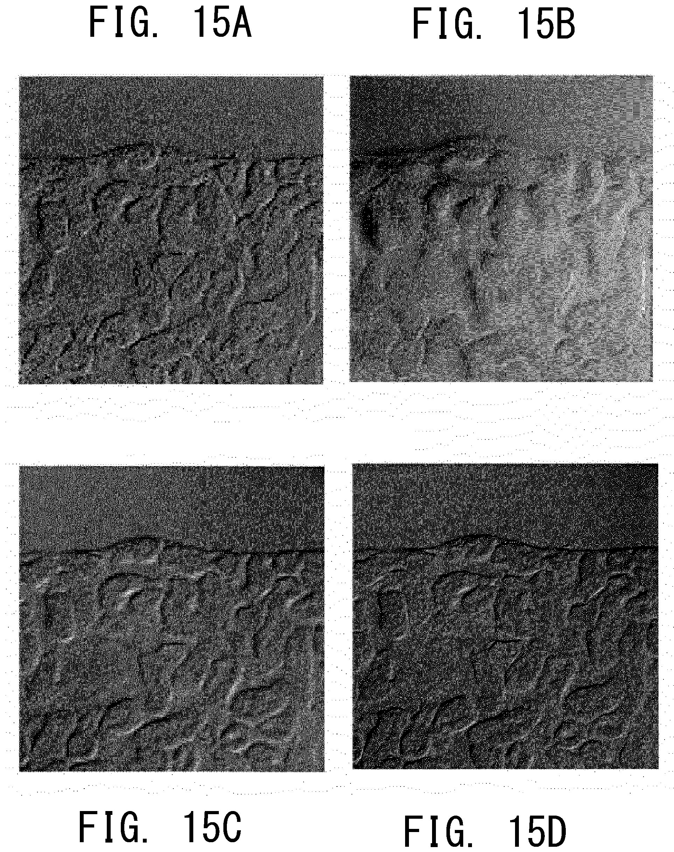

The results are shown in FIGS. 15A to 17B. Among the images shown in FIGS. 15A to 17B, FIGS. 15A and 16A illustrate calibration images after the sensitivity correction of each pixel is performed using images in the blank state without samples to correct for the variation in the light-receiving intensity of many CMOS pixels.

(1) Comparison of differential phase light field microscopy image with normal differential interference image

FIG. 15A shows a differential phase light field microscopy image of a kidney tissue section under a point light source, FIG. 15B shows a differential phase light field microscopy image under a surface light source, FIG. 15C shows a coarse-grained image of a normal differential interference microscope, and FIG. 15D shows an original image of a normal differential interference microscope with a large number of pixels. The point light source differential phase light field microscope image shown in FIG. 15A and the coarse-grained image of a normal differential interference microscope shown in FIG. 15C are considerably similar to each other, demonstrating the possibility of embodiment and effectiveness of the observation method of the present invention.

In contrast, the surface light source differential phase light field microscopy image shown in FIG. 15B had a blurred image and lower resolution than the point light source differential phase light field microscopy image shown in FIG. 15A. This may be because the oblique light component crosses over and enters the neighboring pixels, as shown in FIG. 6C. This result indicates that the point light source is an excellent illumination for differential phase light field microscopy. The high-pixel original image of a normal differential interference microscope shown in FIG. 15D is included as a reference to show the effect of reducing the number of pixels.

(2) Comparison of Bright Field Light Field Microscopic Image under Point Light Source and Normal Bright Field Image (Coarse-Grained)

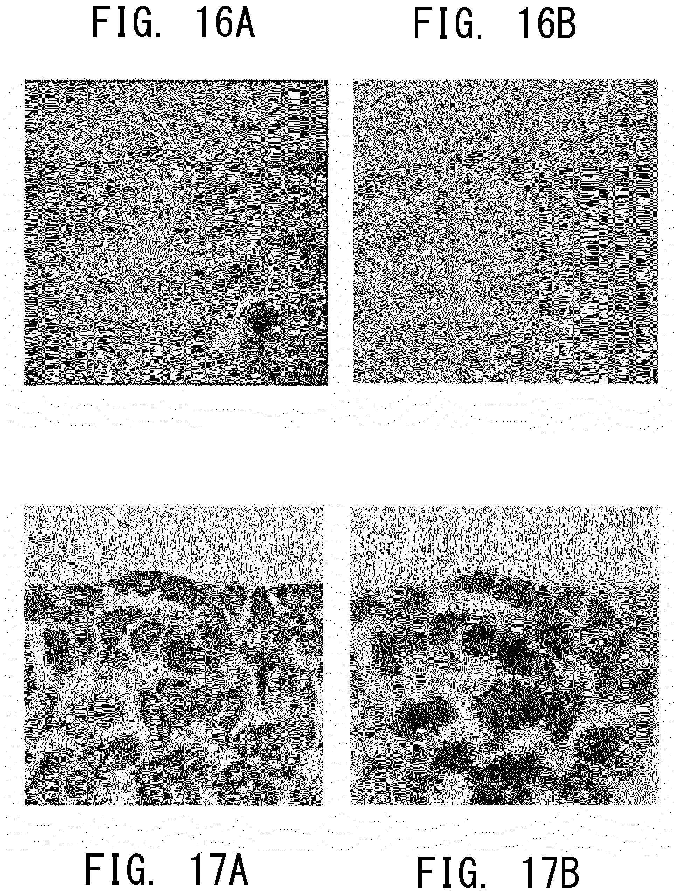

FIG. 16A shows a bright field light field microscopy image of a kidney tissue section of a mouse under a point light source, and FIG. 16B shows a coarse-grained image of normal bright field method. As mentioned above, the surface integral of the image intensity of each microreceiver obtained in the process of calculating the differential phase light field microscopy image gives the bright field image. The point light source bright field light field microscopy image shown in FIG. 16A is the bright field image corresponding to the point light source thus obtained. When this is compared with the coarse-grained normal bright field image shown in FIG. 16B, parallelism cannot be recognized in both images in FIGS. 16A and 16B as recognized in the images of FIGS. 15A to 15D, perhaps because of the difference in light source area in both observations.

(3) Comparison of Bright Field Light Field Microscopy Image with Normal Light Field Image

FIG. 17A is a surface light source bright field light field microscope image of a mouse kidney tissue section and FIG. 17B is its normal light field microscope image. Although both of these experiments were observed in the light field microscopy mode, the processing of the obtained data was different from each other. Specifically, FIG. 17A is an image of the integral of the intensity of the entire detection range of each microreceiver to which the method of the present invention is applied, and FIG. 17B is a replay of all the focal images of the original light-field microscope using a surface light source, i.e., ten confocal images of different depths, and the sum of all the images is taken. The two images are highly similar, although they are expected to give the same results in the sense that the data for the entire detection area in each microphotodetector is equally used.

The equivalence of a light field camera and a multi-focus camera with focus shift has already been experimentally demonstrated, and the demonstration of differential phase light field microscopy shown in FIGS. 15A to 15D imply the demonstration of differential phase multi-focus microscopy. Therefore, the differential phase method using Koehler illumination capable of controlling the light source area according to the present invention has been demonstrated.

[Description of Reference Numerals]

1: Microscopic Apparatus
2, 10, 100: Optical System
3: Imaging Portion
4: Controller
5: Data Processor
11-13, 31 and 101-103: Lenses
21, 111: Light Source Plane
22, 113: Object Plane
23, 112: Diaphragm Plane
24, 114: Detection Plane
25: Diffracted Surface
26: Deflection Coil
31: Main Lens of Light Field Camera
34: Microlens Array
35: Microdetector Array
40: Beam Stopper
41: H-shaped slit
41a: Cross-Linked Portion

42: Light Source Image
f: Focal Length
Z: Optical Axis

**Claims**

1. A microscope observation method comprising the steps of:

    parallelly irradiating an object to be observed with light emitted from a point light source arranged on an optical axis of a microscope according to Kohler illumination method with a minimum aperture diaphragm;
    focusing the light that has passed through the object to be observed and projecting it onto a microlens array disposed on an image plane to be imaged;
    detecting an intensity distribution of a diffracted light field formed on a microphotodetector array arranged on a backward detection plane of the microlens array;
    generating four-dimensional data from a plurality of diffraction images on the microphotodetector array, wherein coordinates of the microlens array are two-dimensional real space coordinates and each set of detection coordinates on the microphotodetector array is two-dimensional frequency space coordinates; and
    calculating area integral and/or center-of-gravity integral of the four-dimensional data in the two-dimensional frequency space coordinates to obtain a two-dimensional intensity image and/or two-dimensional differential phase image of the object to be observed.

2. The microscope observation method according to claim 1, wherein a beam stopper is arranged at an intersection of a diaphragm plane and the optical axis to shield non-scattered component.

3. A microscope observation method comprising the steps of:

    parallelly radiating light simultaneously emitted from each point light source configuring a surface light source onto an object to be observed;
    focusing the light that has passed through the object to be observed to form a real image on a detection plane;
    acquiring a real image from an intensity distribution of a light field formed on the detection plane and capturing a plurality of real images that differ in focus from each other;
    creating three-dimensional data from the real images; and
    acquiring a two-dimensional intensity image and/or a two-dimensional differential phase image of the object to be observed by performing three-dimensional Fourier transform of the three-dimensional data, then using a projection-section theorem to generate four-dimensional data configured by two-dimensional light source plane coordinates and two-dimensional detection plane coordinates, and computing an area integral and/or center of gravity integral in the two-dimensional light source plane coordinates.

4. A microscope observation method comprising:

    an illumination step of parallelly radiating light emitted from a point light source onto an object to be observed in an oblique direction;
    an image forming step of focusing scattered light that has been deflected by the object to be observed and passed through a diaphragm arranged at a position conjugate with the point light source to form a real image on a detection plane;
    performing the illumination step and the image forming step while two-dimensionally scanning the point light source to generate four-dimensional data configured by two-dimensional light source plane coordinates and two-dimensional detection plane coordinates; and
    calculating center of gravity integral of the four-dimensional data in the two-dimensional light source plane coordinates to obtain a two-dimensional differential phase image of the object to be observed.

5. The microscope observation method according to claim 3, wherein a beam stopper is arranged at a point where non-scattered component is focused in the diaphragm to shield the non-scattered component.

6. A microscope observation method comprising:

    an illumination step of parallelly radiating light emitted from a point light source onto an object to be observed in an oblique direction;

an image forming step of focusing scattered light that has been deflected by the object to be observed and passed through a diaphragm arranged at a position conjugate with the point light source to form a real image on a detection plane;

performing the illumination step and the image forming step while two-dimensionally scanning the diaphragm to generate four-dimensional data configured by two-dimensional scanning coordinates and two-dimensional detection plane coordinates; and

calculating a center of gravity integral of the four-dimensional data in two-dimensional light source plane coordinates that are point-symmetrical with the two-dimensional scanning coordinates to obtain a two-dimensional differential phase image of the object to be observed.

7. The microscope observation method according to claim 6, wherein a beam stopper is arranged at a point where non-scattered component is focused in the diaphragm to shield the non-scattered component.

8. A microscope observation method comprising:

an illumination step of parallelly radiating light emitted from a point light source onto an object to be observed in an oblique direction;

an image forming step of focusing scattered light that has been deflected by the object to be observed and passed through an H-shaped slit arranged at a position conjugate with the point light source to form a real image on a detection plane;

adjusting a position of a light source image at a cross-linked portion of the H-shaped slit and scanning light from the point light source or the H-shaped slit in one dimension at the cross-linked portion to generate three-dimensional data; and calculating center of gravity integral of the one-dimensional data in each point of the two-dimensional detection plane coordinates for the three-dimensional data to obtain a two-dimensional differential phase image of the object to be observed, wherein

since non-scattered component is focused on the cross-linked portion of the H-shaped slit, the cross-linked portion serves as a beam stopper and shields the non-scattered component.

9. A transmission microscopic apparatus comprising:

an illumination optical system for parallelly irradiating an object to be observed with light emitted from a point light source arranged on an optical axis of a microscope according to Kohler illumination method with a minimum aperture diaphragm;

an image forming optical system for focusing the light that has passed through the object to be observed and projecting it onto a microlens array disposed on an image plane to be imaged;

an imaging portion for detecting an intensity distribution of a diffracted light field formed on a microphotodetector array arranged on a backward detection plane of the microlens array;

a four-dimensional data generating portion for generating four-dimensional data from a plurality of diffraction images on the microphotodetector array, wherein coordinates of the microlens array are two-dimensional real space coordinates and each set of detection coordinates on the microphotodetector array are two-dimensional frequency space coordinates; and

a data processor for calculating an area integral and/or center of gravity integral of the four-dimensional data in the two-dimensional frequency space coordinates to obtain a two-dimensional intensity image and/or a two-dimensional differential phase image of the object to be observed.

10. A transmission microscopic apparatus comprising:

an illumination optical system for parallelly radiating light simultaneously emitted from each point light source configuring a surface light source onto an object to be observed;

an image forming optical system for focusing the light that has passed through the object to be observed to form a real image on a detection plane;

an imaging portion for acquiring a real image from an intensity distribution of a light field formed on the detection plane and capturing a plurality of real images that differ in focus from each other;

a three-dimensional data generating portion for generating three-dimensional data from the real images; and

a data processor for generating a two-dimensional intensity image and/or a two-dimensional differential phase image of the object to be observed from the three-dimensional data, wherein

the data processor acquires the two-dimensional intensity image and/or the two-dimensional differential phase image of the object to be observed by performing three-dimensional Fourier transform of the three-dimensional data, then using a projection-section theorem to generate four-dimensional data configured by two-dimensional light source plane coordinates and two-dimensional detection plane coordinates, and computing an area integral and/or center of gravity integral in the two-dimensional light source plane coordinates.

11. The transmission microscopic apparatus according to claim 9 or 10, wherein the illumination optical system is configured by one or more lenses and one or more diaphragms.

12. The transmission microscopic apparatus according to any one of claims 9 to 11, wherein the image forming optical system is configured by a diaphragm plane arranged between at least two lenses.

13. A transmission microscopic apparatus comprising:

an illumination optical system for parallelly radiating light emitted from a point light source onto an object to be observed in an oblique direction;
an image forming optical system for focusing scattered light that has been deflected by the object to be observed and passed through a diaphragm arranged at a position conjugate with the point light source to form a real image on a detection plane;
a four-dimensional data generating portion for performing the parallel radiation and the image forming while two-dimensionally scanning the point light source to generate four-dimensional data configured by two-dimensional light source plane coordinates and two-dimensional detection plane coordinates; and
a data processor for calculating center of gravity integral of the four-dimensional data in the two-dimensional light source plane coordinates to obtain a two-dimensional differential phase image of the object to be observed.

14. A transmission microscopic apparatus comprising:

an illumination optical system for parallelly radiating light emitted from a point light source onto an object to be observed in an oblique direction;
an image forming optical system for focusing scattered light that has been deflected by the object to be observed and passed through a diaphragm arranged at a position conjugate with the point light source to form a real image on a detection plane;
a four-dimensional data generating portion for performing the parallel radiation and the image forming while two-dimensionally scanning the diaphragm to generate four-dimensional data configured by two-dimensional scanning coordinates and two-dimensional detection plane coordinates; and
a data processor for calculating a center of gravity integral of the four-dimensional data in two-dimensional light source plane coordinates that are point-symmetrical with the two-dimensional scanning coordinates to obtain a two-dimensional differential phase image of the object to be observed.

15. A transmission microscopic apparatus comprising:

an illumination optical system for parallelly radiating light emitted from a point light source onto an object to be observed in an oblique direction;
an image forming optical system for focusing scattered light that has been deflected by the object to be observed and passed through an H-shaped slit arranged at a position conjugate with the point light source to form a real image on a detection plane;
a three-dimensional data generating portion for adjusting a position of a light source image at a cross-linked portion of the H-shaped slit and scanning light from the point light source or the H-shaped slit in one dimension at the cross-linked portion to generate three-dimensional data; and
a data processor for calculating center of gravity integral of the one-dimensional data in each point of the two-dimensional detection plane coordinates for the three-dimensional data to obtain a two-dimensional differential phase image of the object to be observed, wherein
since non-scattered component is focused on the cross-linked portion of the H-shaped slit, the cross-linked portion serves as a beam stopper and shields the non-scattered component.

16. A transmission microscopic apparatus comprising:

an illumination optical system for parallelly radiating light emitted from a point light source onto an object to be observed in an oblique direction;

an image forming optical system for focusing scattered light that has been deflected by the object to be observed and passed through a diaphragm arranged at a position conjugate with the point light source to project and form an image onto a microlens array arranged on an image plane;

a detecting system for detecting an intensity distribution of a diffracted light field formed on a microphotodetector array arranged on a backward detection plane of the microlens array;

a four-dimensional data generating portion for generating four-dimensional data from a plurality of diffraction images on the microphotodetector array, wherein coordinates of the microlens array are two-dimensional real space coordinates and each set of detection coordinates on the microphotodetector array are two-dimensional frequency space coordinates; and

a data processor for calculating center of gravity integral of the four-dimensional data in the two-dimensional frequency space coordinates to obtain a two-dimensional differential phase image of the object to be observed, wherein

a beam stopper is arranged at an intersection of a diaphragm plane and an optical axis to shield non-scattered component.

FIG. 1

FIG. 2

# FIG. 3A

# FIG. 3B

FIG. 4

# FIG. 5

FIG. 6A

FIG. 6B

FIG. 6C

FIG. 7A

FIG. 7B

FIG. 7C

FIG. 7D

# FIG. 8A

# FIG. 8B

# FIG. 9

41

42 ● 41a

# FIG. 10

FIG. 11

# FIG. 12

# FIG. 13

# FIG. 14

CREATE FOUR-DIMENSIONAL DATA $U_K(s_s, r_d)$
WHERE POSITION OF MICROLENS IS REAL COORDINATE $r_d$ AND
PIXEL POSITION OF EACH MICRODETECTOR IS FREQUENCY
COORDINATE $s_s$

FOR INDIVIDUAL $r_d$ VALUE,
COMPUTE SURFACE INTEGRAL OF $U_K(s_s, r_d)$
AS TWO-DIMENSIONAL FUNCTION
AT COORDINATE $s_s$

FOR INDIVIDUAL $r_d$ VALUE,
COMPUTE PRIMARY MOMENT OF $U_K(s_s, r_d)$
AS TWO-DIMENSIONAL FUNCTION
AT COORDINATE $s_s$

COMPUTE
CENTER OF GRAVITY INTEGRAL
= (PRIMARY MOMENT/SURFACE INTEGRAL)

DIFFERENTIAL PHASE IMAGE CORRESPONDING TO COORDINATE $r_d$

FIG. 15A

FIG. 15B

FIG. 15C

FIG. 15D

FIG. 16A

FIG. 16B

FIG. 17A

FIG. 17B

**EP 3 722 861 A1**

<table>
<tr><td align="center">INTERNATIONAL SEARCH REPORT</td><td colspan="2">International application No.<br>PCT/JP2018/028534</td></tr>
</table>

**A. CLASSIFICATION OF SUBJECT MATTER**
Int.Cl. G02B21/00(2006.01)i, G02B21/06(2006.01)i, G02B21/10(2006.01)i

According to International Patent Classification (IPC) or to both national classification and IPC

**B. FIELDS SEARCHED**

Minimum documentation searched (classification system followed by classification symbols)
Int.Cl. G02B21/00, G02B21/06, G02B21/10

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2014/0263963 A1 (THE BOARD OF TRUSTEES OF THE LELAND STANFORD JUNIOR UNIVERSITY) 18 September 2014, entire text, all drawings (Family: none) | 1-16 |
| A | JP 2017-167535 A (OLYMPUS CORPORATION) 21 September 2017, entire text, all drawings & US 2017/0261731 A1 | 1-16 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>13.12.2018 | Date of mailing of the international search report<br>25.12.2018 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

44

**INTERNATIONAL SEARCH REPORT**

International application No.

PCT/JP2018/028534

C (Continuation). DOCUMENTS CONSIDERED TO BE RELEVANT

| Category* | Citation of document, with indication, where appropriate, of the relevant passages | Relevant to claim No. |
|---|---|---|
| A | CN 103513411 A (HONG KONG APPLIED SCIENCE AND TECHNOLOGY RESEARCH INSTITUTE COMPANY LIMITED) 15 January 2014, entire text, all drawings (Family: none) | 1-16 |
| A | US 2013/0176622 A1 (HOWARD HUGHES MEDICAL INSTITUTE) 11 July 2013, entire text, all drawings & WO 2013/106731 A1 & EP 2802861 A1 | 1-16 |
| A | JP 2003-512681 A (3M INNOVATIVE PROPERTIES COMPANY) 02 April 2003, entire text, all drawings & US 6477273 B1 & WO 2001/029758 A1 & EP 1224612 A1 & DE 60004080 T2 & AU 4081300 A | 1-16 |
| A | JP 61-219919 A (OLYMPUS OPTICAL CO., LTD.) 30 September 1986, entire text, all drawings & US 4734578 A1 & DE 3610165 A1 | 1-16 |
| A | WADDELL, E. M., CHAPMAN, J. N., Linear imaging of strong phase objects using asymmetrical detection in STEM, Optik, 05 February 1979 (received date), vol. 54, pp. 83-96 | 1, 5, 7-8, 15 |
| E, A | WO 2018/211601 A1 (OLYMPUS CORPORATION) 22 November 2018, entire text, all drawings (Family: none) | 1-16 |

Form PCT/ISA/210 (continuation of second sheet) (January 2015)

## INTERNATIONAL SEARCH REPORT

| International application No. |
|---|
| PCT/JP2018/028534 |

**Box No. II    Observations where certain claims were found unsearchable (Continuation of item 2 of first sheet)**

This international search report has not been established in respect of certain claims under Article 17 (2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
[see extra sheet]

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**

| International application No. |
| --- |
| PCT/JP2018/028534 |

(Continuation of Box No. III)

(Invention 1) Claims 1-7, 9-14, and 16
    Claims 1-7, 9-14, and 16 have the special technical feature of creating four-dimensional data, and calculating an (area integral or) center of mass integral in some coordinate of the four-dimensional data to acquire a (two-dimensional intensity image or) two-dimensional differential phase image of a subject under observation; thus these claims are classified as invention 1.

(Invention 2) Claims 8 and 15
    Claim 8 has the common technical feature between this claim and claim 1 classified as invention 1 of "performing lighting such that parallel beam irradiation with light emitted from the light source is performed on the subject under observation. However, this technical feature, which does not make a contribution over the prior art in light of the disclosure of document A (JP 10-288741 A (NIKON CORPORATION) 27 October 1998, paragraphs [0027], [0028], [0041], [0065], [0067], fig. 1, 4, etc. (Family: none)), cannot be considered a special technical feature. Apart from this feature, there are not the same or corresponding special technical features between these inventions. A similar evaluation applies to the relationship between claim 15 and claim 9 classified as invention 1.
    Furthermore, claims 8 and 15 do not depend from claim 1 or 9. In addition, claims 8 and 15 are not substantially identical to or similarly closely related to any of the claims classified as invention 1.
    Accordingly claims 8 and 15 cannot be identified as invention 1. Meanwhile, claims 8 and 15 have the special technical feature of forming a real image on the detection surface by concentrating scattered light that has passed through an H-shaped slit disposed at a position that is conjugate to the point light source, making adjustment such that a light source image is positioned at the bridge part of the H-shaped slit, performing, in the bridge part, one-dimensional scanning of light from the point light source or the H-shaped slit, creating three-dimensional data, and calculating, on the three-dimensional data, a center of mass integral of one-dimensional data of each point in the two-dimensional coordinates of the detection surface to acquire a two-dimensional differential phase image of the subject under observation; thus these claims are classified as invention 2.

Form PCT/ISA/210 (extra sheet) (January 2015)

| INTERNATIONAL SEARCH REPORT | International application No. |
|---|---|
| | PCT/JP2018/028534 |

[What is examined]

1. Claim 2, which must be defined as a claim depending from claim 1, but is written in an independent form instead of a dependent form (this can be considered a typographical error), does not make sense in the way it is defined. In this sense, this claim goes beyond the scope disclosed in the description, and thus does not fulfill the requirement for support under PCT Article 6. However, when this claim is regarded as depending from claim 1, it makes sense, and falls within the scope disclosed in the description. Thus, the examination for the present international application has been carried out by regarding it as depending from claim 1.

2. Claim 5, which depends from claim 3, should claim the "third embodiment", as in claim 3 that claims the "third embodiment". However, no explanation for using the configuration of claim 5 in the "third embodiment" is found in the description. Accordingly, in this sense, the invention of claim 5 goes beyond the scope disclosed in the description, and thus does not fulfill the requirement for support under PCT Article 6.

In this regard, considering that the description discloses using, in the "fourth embodiment" (claim 4 that claims this), the configuration recited in claim 5, and that claim 5 is preceded by claim 4, it can be considered that claim 5 is erroneously defined as a claim depending from claim 3, though it should be defined as a claim depending from claim 4. When it is considered so, the invention of claim 5 falls within the scope disclosed in the description. Thus, the examination for the present international application has been carried out by regarding it as depending from claim 4.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. M. WADDELL ; J. N. CHAPMAN.** Linear imaging of strong phase objects using asymmetrical detection in STEM. *Optik,* 1979, vol. 54, 83-96
- **G. R. MORRISON ; J. N. CHAPMAN.** A comparison of three differential phase contrast systems suitable for use in STEM. *Optik,* 1983, vol. 64, 1-12
- **J. PALMER ; G. MORRISON.** Differential phase contrast imaging in the scanning transmission x-ray microscope. *Proc. Short-Wavelength Coherent Radiation,* 1991, vol. 11, 141-145
- **A. GIANONCELLI ; G. R. MORRISON ; B. KAULICH ; D. BACESCU ; J.KOVAC.** Scanning transmission x-ray microscopy with a configurable detector. *Appl. Phys. Lett.,* 2006, vol. 89, 251117-1, 3
- **B. HORNBERGER ; M. FESER ; C. JACOBSEN.** Quantitative amplitude and phase contrast imaging in a scanning transmission X-ray microscope. *Ultramicroscopy,* 2007, vol. 107, 644-655
- **P. THIBAULT ; M. DIEROLF ; A. MENZEL ; O. BUNK ; C. DAVID ; F. PFEIFFER.** High-Resolution Scanning X-ray Diffraction Microscopy. *Science,* 2008, vol. 321, 379-382
- **A. LUBK ; J. ZWECK.** Differential phase contrast: An integral perspective. *Phys. Rev.,* 2015, vol. A91, 23805-1, 6
- **I. LAZIC ; E. G. T. BOSCH ; S. LAZAR.** Phase contrast STEM for thin samples: Integrated differential phase contrast. *Ultramicroscopy,* 2016, vol. 160, 265-280
- **REN NG ; MARC LEVOY ; MATHIEU BREDIF ; GENE DUVAL ; MARK HOROWITZ ; PAT HANRAHAN.** Light Field Photography with a Hand-held Plenoptic Camera. *Stanford Tech Report CTSR,* February 2005, 1-11
- **ROBERT PREVEDEL et al.** Simultaneous whole-animal 3Dimaging of neuronal activity using light-field microscopy. *Nature Methods,* 2014, vol. 11, 727-730
- **KAZUYA KODAMA ; AKIRA KUBOTA.** Efficient Reconstruction of All-in-Focus Images Through Shifted Pinholes from Multi-Focus Images for Dense Light Field Synthesis and Rendering. *IEEE Trans. Image Processing,* 2013, vol. 22, 4407-4421